(19) Europäisches Patentamt
European Patent Office
Office européen des brevets

(11) EP 4 624 538 A1

(12) # EUROPEAN PATENT APPLICATION

(43) Date of publication:
**01.10.2025 Bulletin 2025/40**

(21) Application number: **25164688.1**

(22) Date of filing: **19.03.2025**

(51) International Patent Classification (IPC):
***C09D 11/101*** *(2014.01)* ***C09D 11/322*** *(2014.01)*
***C09D 11/326*** *(2014.01)*

(52) Cooperative Patent Classification (CPC):
**C09D 11/101; C09D 11/106; C09D 11/107; C09D 11/322; C09D 11/326; C09D 11/38**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **26.03.2024 JP 2024050490**
**16.05.2024 JP 2024080185**

(71) Applicant: **FUJIFILM Corporation**
**Tokyo 106-8620 (JP)**

(72) Inventors:
- **UMEBAYASHI, Tsutomu**
  **Kanagawa, 258-8577 (JP)**
- **SHIRAKI, Fumiya**
  **Kanagawa, 258-8577 (JP)**
- **SETO, Yuki**
  **Kanagawa, 258-8577 (JP)**

(74) Representative: **Klunker IP Patentanwälte PartG mbB**
**Destouchesstraße 68**
**80796 München (DE)**

(54) **ACTIVE ENERGY RAY-CURABLE INK JET INK, IMAGE RECORDING METHOD, AND MANUFACTURING METHOD OF LAMINATE**

(57) An active energy ray-curable ink jet ink includes: a coloring pigment; a polymerizable compound; a polymer-type pigment dispersing agent having a glass transition temperature of 80°C or higher; and a polymer-type pigment dispersing agent having a glass transition temperature of 0°C or lower, in which, in a case where a concentration of the polymer-type pigment dispersing agent having a glass transition temperature of 80°C or higher is indicated by M1 and a concentration of the polymer-type pigment dispersing agent having a glass transition temperature of 0°C or lower is indicated by M2, $0.2 \leq M1/M2$ is satisfied.

EP 4 624 538 A1

## Description

## BACKGROUND OF THE INVENTION

1. Field of the Invention

The present disclosure relates to an active energy ray-curable ink jet ink, an image recording method, and a manufacturing method of a laminate.

2. Description of the Related Art

In the related art, various studies have been conducted on image recording with an ink jet ink.
For example, JP2011-122063A discloses an ultraviolet curable-type ink jet ink (that is, an ultraviolet ray-curable ink jet ink) which is excellent in jettability, curability, and flexibility, in which, in an ink jet ink consisting of at least (A) dipropylene glycol diacrylate, (B) N-vinylcaprolactam, and (C) a monofunctional acrylic monomer having a Tg of lower than 20°C, a total of formulation amounts of (A), (B), and (C) is 60% to 90% by weight and a formulation amount of a monofunctional acrylic monomer having a Tg of 20°C or higher is less than 10% by weight in all ink components.

## SUMMARY OF THE INVENTION

In some cases, a laminate is manufactured by laminating an image recorded material which is obtained by applying an active energy ray-curable ink jet ink (for example, an ultraviolet ray-curable ink jet ink) onto a base material for image recording, containing a polymer including vinyl chloride as a constitutional unit (for example, polyvinyl chloride), to record an image, and a lamination base material containing a polymer including vinyl chloride as a constitutional unit (for example, polyvinyl chloride) in an arrangement in which the image in the image recorded material and the lamination base material face each other. In this case, it may be required to improve a lamination strength between the image and the base material for lamination.
As a result of studies by the present inventors, it is found that, in a case where a formulation of an active energy ray-curable ink jet ink for recording an image is adjusted to improve the lamination strength of the obtained image, storage stability of the active energy ray-curable ink jet ink may be decreased (for example, see Comparative Example 2 described later).
On the other hand, it is also found that, in a case where the storage stability of the active energy ray-curable ink jet ink is attempted to be improved by adjusting the formulation of the active energy ray-curable ink jet ink for recording an image, the lamination strength of the obtained image may be decreased (for example, see Comparative Example 1 described later).
The present disclosure has been made in view of such circumstances, and an object to be achieved by one embodiment of the present disclosure is to provide an active energy ray-curable ink jet ink with which an image having excellent lamination strength can be recorded and which has excellent storage stability; and an image recording method and a manufacturing method of a laminate, which can be performed using an active energy ray-curable ink jet ink having excellent storage stability and with which an image having excellent lamination strength can be recorded.
The present disclosure includes the following aspects.

<1> An active energy ray-curable ink jet ink comprising:

a coloring pigment;
a polymerizable compound;
a polymer-type pigment dispersing agent having a glass transition temperature of 80°C or higher; and
a polymer-type pigment dispersing agent having a glass transition temperature of 0°C or lower,
in which, in a case where a concentration of the polymer-type pigment dispersing agent having a glass transition temperature of 80°C or higher is indicated by M1 and a concentration of the polymer-type pigment dispersing agent having a glass transition temperature of 0°C or lower is indicated by M2, $0.20 \leq M1/M2$ is satisfied.

<2> The active energy ray-curable ink jet ink according to <1>,
in which, in a case where a concentration of the coloring pigment is indicated by Mp, the concentration of the polymer-type pigment dispersing agent having a glass transition temperature of 80°C or higher is indicated by M1, and the concentration of the polymer-type pigment dispersing agent having a glass transition temperature of 0°C or lower is indicated by M2, $1.00 \leq Mp/(M1 + M2) \leq 4.00$ is satisfied.
<3> The active energy ray-curable ink jet ink according to <1> or <2>,

in which, in a case where the concentration of the polymer-type pigment dispersing agent having a glass transition temperature of 80°C or higher is indicated by M1 and the concentration of the polymer-type pigment dispersing agent having a glass transition temperature of 0°C or lower is indicated by M2, $0.50 \leq M1/M2 \leq 2.20$ is satisfied.
<4> The active energy ray-curable ink jet ink according to any one of <1> to <3>,
in which the polymerizable compound contains

a monomer 1 which is at least one selected from the group consisting of an N-vinyl compound and a (meth)acryloyl morpholine, and
a monomer 2 which has a (meth)acryloyl group and at least one of an aliphatic ring structure or an aliphatic heterocyclic ring structure, has a molecular weight of 205 or less, and has a solubility parameter of 16.5 $MPa^{1/2}$ to 21.5 $MPa^{1/2}$, and

a total content of the monomer 1 and the monomer 2 is 50% by mass or more with respect to a total amount of the active energy ray-curable ink jet ink.
<5> The active energy ray-curable ink jet ink according to <4>,

in which the monomer 1 includes at least one selected from the group consisting of N-vinylcaprolactam, acryloyl morpholine, vinylmethyloxazolidinone, and N-vinylpyrrolidone, and
the monomer 2 includes at least one selected from the group consisting of tetrahydrofurfuryl acrylate, cyclohexyl acrylate, 3,3,5-trimethylcyclohexyl acrylate, and 4-t-butylcyclohexyl acrylate.

<6> The active energy ray-curable ink jet ink according to <4> or <5>,

in which the polymerizable compound further contains a monomer 3 which is a polymerizable monomer having two or more ethylenically unsaturated groups, and
a content of the monomer 3 is more than 0% by mass and 20% by mass or less with respect to the total amount of the active energy ray-curable ink jet ink.

<7> The active energy ray-curable ink jet ink according to any one of <1> to <6>,
in which the coloring pigment is at least one selected from the group consisting of a diketopyrrolopyrrole pigment, C. I. Pigment Violet 19, C. I. Pigment Yellow 120, C. I. Pigment Yellow 150, C. I. Pigment Yellow 151, and C. I. Pigment Yellow 155.
<8> An image recording method comprising:
a step of applying the ink jet ink according to any one of <1> to <7> onto a base material for image recording, containing a polymer including vinyl chloride as a constitutional unit, by an ink jet recording method to record an image.
<9> A manufacturing method of a laminate, comprising:

a step of obtaining an image recorded material including the base material for image recording and the image by the image recording method according to <8>; and
a step of laminating the image recorded material and a base material for lamination, containing a polymer including vinyl chloride as a constitutional unit, in an arrangement in which the image in the image recorded material and the base material for lamination face each other, to obtain a laminate.

According to one embodiment of the present disclosure, there are provided an active energy ray-curable ink jet ink with which an image having excellent lamination strength can be recorded and which has excellent storage stability; and an image recording method and a manufacturing method of a laminate, which can be performed using an active energy ray-curable ink jet ink having excellent storage stability and with which an image having excellent lamination strength can be recorded.

## DESCRIPTION OF THE PREFERRED EMBODIMENTS

In the present specification, the numerical ranges shown using "to" means ranges including the numerical values described before and after "to" as the minimum value and the maximum value.
In a numerical range described in a stepwise manner in the present specification, an upper limit value or a lower limit value described in a certain numerical range may be replaced with an upper limit value or a lower limit value in another numerical range described in a stepwise manner. In addition, in the numerical range described in the present specification, an upper limit value and a lower limit value described in a certain numerical range may be replaced with values shown in Examples.

In the present specification, in a case where a plurality of substances corresponding to each component in a composition is present, the amount of each component in the composition means the total amount of the plurality of substances present in the composition, unless otherwise specified.
In the present specification, a combination of two or more preferred aspects is a more preferred aspect.
In the present specification, the meaning of the term "step" includes not only an independent step but also a step whose intended purpose is achieved even in a case where the step is not clearly distinguished from other steps.
In the present specification, the term "image" denotes an entire film formed by applying an ink (that is, an ink film), and the term "image recording" denotes formation of the image (that is, the ink film).
The concept of "image" in the present specification also includes a solid image.
In the present specification, "(meth)acrylate" is a concept including both acrylate and methacrylate. In addition, "(meth)acryl" is a concept that includes both acryl and methacryl.

Active Energy Ray-Curable Ink Jet Ink

The active energy ray-curable ink jet ink according to the present disclosure is an ink jet ink which is cured by irradiation with active energy ray.
Examples of the active energy ray include $\gamma$-rays, $\beta$-rays, electron beams, ultraviolet rays, and visible rays.
Among these, ultraviolet rays are preferable as the active energy ray.
The active energy ray-curable ink jet ink according to the present disclosure is preferably an ultraviolet ray-curable ink jet ink.
The active energy ray-curable ink jet ink (hereinafter, also simply referred to as "ink") according to the present disclosure contains a coloring pigment, a polymerizable compound, a polymer-type pigment dispersing agent having a glass transition temperature of 80°C or higher (hereinafter, also referred to as "dispersing agent having a Tg of 80°C or higher"), and a polymer-type pigment dispersing agent having a Tg of 0°C or lower (hereinafter, also referred to as "dispersing agent having a Tg of 0°C or lower"), in which, in a case where a concentration of the dispersing agent having a Tg of 80°C or higher (that is, a content (% by mass) with respect to the total amount of the ink) is indicated by M1 and a concentration of the dispersing agent having a Tg of 0°C or lower (that is, a content (% by mass) with respect to the total amount of the ink) is indicated by M2, $0.20 \leq M1/M2$ is satisfied.
As described above, as a result of studies by the present inventors, it is found that, in a case where a formulation of the active energy ray-curable ink jet ink for recording an image (specifically, the type and amount of the pigment dispersing agent) is adjusted to improve the lamination strength of the obtained image, storage stability of the active energy ray-curable ink jet ink may be decreased (for example, see Comparative Example 2 described later).
On the other hand, it is found that, in a case where the storage stability of the active energy ray-curable ink jet ink is attempted to be improved by adjusting the formulation of the active energy ray-curable ink jet ink for recording an image (specifically, the type and amount of the pigment dispersing agent), the lamination strength of the obtained image may be decreased (for example, see Comparative Example 1 described later).
Regarding the above-described problem, with the ink according to the present disclosure, an image having excellent lamination strength can be recorded, and the storage stability of the ink is also excellent (that is, both the improvement of the lamination strength of the image and the improvement of the storage stability of the ink are achieved).
The reason why such an effect is exhibited is presumed as follows.
It is considered that the dispersing agent having a Tg of 0°C or lower contributes to improving the dispersion stability of the pigment and the storage stability of the ink. On the other hand, it is considered that the dispersing agent having a Tg of 0°C or lower is disadvantageous for the lamination strength of the image.
On the other hand, it is considered that the dispersing agent having a Tg of 80°C or higher contributes to the improvement of the lamination strength. On the other hand, it is considered that the dispersing agent having a Tg of 80°C or higher is disadvantageous for the storage stability of the ink.
The ink according to the present disclosure contains both the dispersing agent having a Tg of 80°C or higher (concentration M1) and the dispersing agent having a Tg of 0°C or lower (concentration M2), and satisfies $0.20 \leq M1/M2$.
In this manner, it is considered that both the improvement of the lamination strength of the image and the improvement of the storage stability of the ink are achieved.
Hereinafter, each component which can be contained in the ink according to the present disclosure will be described.

Dispersing Agent having Tg of 80°C or Higher

The ink according to the present disclosure contains at least one dispersing agent having a Tg of 80°C or higher (that is, a polymer-type pigment dispersing agent having a glass transition temperature of 80°C or higher).

Glass Transition Temperature (Tg)

In the dispersing agent having a Tg of 80°C or higher, Tg (glass transition temperature) of 80°C or higher contributes to the improvement of the lamination strength.
From the viewpoint of further improving the lamination strength, Tg of the dispersing agent having a Tg of 80°C or higher is preferably 90°C or higher and more preferably 100°C or higher.
The upper limit of Tg in the dispersing agent having a Tg of 80°C or higher is not particularly limited, but from the viewpoint of further improving jettability of the ink from an ink jet head, Tg in the dispersing agent having a Tg of 80°C or higher is preferably 120°C or lower.
In the present disclosure, the Tg of the dispersing agent is measured using a differential scanning calorimeter (for example, "DSC-7" manufactured by PerkinElmer Inc.) in accordance with ASTM D 3418-8.
For temperature correction of a detection unit of the differential scanning calorimeter, a melting point of indium and zinc is used, and for heat correction, heat of fusion of indium is used.
The above-described differential scanning calorimeter is set with a sample (that is, the dispersing agent to be measured) placed on an aluminum pan, and an empty aluminum pan is set as a control.
In this state, the temperature is raised at a temperature rising rate of 10 °C/min, held at 150°C for 5 minutes, lowered from 150°C to 0°C at -10 °C/min using liquid nitrogen, held at 0°C for 5 minutes, and raised again from 0°C to 150°C at 10 °C/min. The glass transition temperature (Tg) of the dispersing agent is determined based on an onset temperature analyzed from an endothermic curve at the second temperature rise in the series of operations.

Weight-Average Molecular Weight (Mw)

A weight-average molecular weight (Mw) of the dispersing agent having a Tg of 80°C or higher is preferably 10K to 100K, more preferably 10K to 50K, and still more preferably 15K to 40K.
In a case where the weight-average molecular weight of the dispersing agent having a Tg of 80°C or higher is 10K or more, the storage stability of the ink is further improved.
In a case where the weight-average molecular weight of the dispersing agent having a Tg of 80°C or higher is 100K or less, the jettability of the ink is further improved.
In the present disclosure, "K" in the weight-average molecular weight (Mw) means 1,000.
For example, 10K to 50K means 10,000 to 50,000.
In the present disclosure, the weight-average molecular weight (Mw) of the dispersing agent means a value obtained as a polystyrene-equivalent value by gel permeation chromatography (GPC) measurement under the following conditions.
Conditions for GPC Measurement

· Measuring device: HLC-8220GPC (manufactured by Tosoh Corporation) · Solvent: N-methylpyrrolidone (10 mM LiBr)
· Column: fine particle gel with hydrophilic vinyl polymer as base material · Column temperature: 40°C
· Flow rate: 0.5 mL/min
· Sample concentration: 0.1% by mass
· Injection volume: 60 μL
· Detector: RI

Amine Value

It is preferable that the dispersing agent having a Tg of 80°C or higher has an amine structure, that is, has an amine value.
From the viewpoint of dispersion stability of the pigment and storage stability of the ink, the amine value of the dispersing agent having a Tg of 80°C or higher is preferably 10.0 mgKOH/g to 50.0 mgKOH/g and more preferably 30.0 mgKOH/g to 40.0 mgKOH/g.
In the present disclosure, the amine value of the dispersing agent means a value measured by the following procedure.
The dispersing agent is dissolved in methyl isobutyl ketone, and the obtained dispersing agent solution is subjected to potentiometric titration with a 0.01 mol/L methyl isobutyl ketone solution of perchloric acid, and the obtained result is converted into a value in terms of KOHmg/g and defined as the amine value.
The potentiometric titration can be performed using, for example, an automatic titrator COM-1500 manufactured by HIRANUMA Co., Ltd.
The type of the polymer (that is, the resin) constituting the dispersing agent having a Tg of 80°C or higher is

preferably an acrylic resin, a polyester resin, or a urethane resin.

In the present disclosure, the acrylic resin means a polymer (homopolymer or copolymer) of a raw material monomer containing at least one selected from the group consisting of (meth)acrylic acid and a derivative of (meth)acrylic acid (for example, a (meth)acrylic acid ester).

In a case of preparing the ink according to the present disclosure, a single substance of the dispersing agent having a Tg of 80°C or higher (that is, the dispersing agent having a solid content of 100% by mass) may be used, or a solution of the dispersing agent having a Tg of 80°C or higher may be used.

Examples of a solvent in the solution include a monofunctional polymerizable monomer and an organic solvent.

Examples of the monofunctional polymerizable monomer as the solvent in the solution of the dispersing agent include phenoxyethyl acrylate.

Examples of the organic solvent as the solvent in the solution of the dispersing agent include n-butyl acetate and 1-methoxy-2-propyl acetate.

Dispersing Agent having Tg of 0°C or Lower

The ink according to the present disclosure contains at least one dispersing agent having a Tg of 0°C or lower (that is, a polymer-type pigment dispersing agent having a glass transition temperature of 0°C or lower).

Glass Transition Temperature (Tg)

In the dispersing agent having a Tg of 0°C or lower, Tg of 0°C or lower contributes to the improvement of the storage stability of the ink.

From the viewpoint of further improving the storage stability of the ink, Tg in the dispersing agent having a Tg of 0°C or lower is preferably -60°C or lower.

The lower limit of Tg in the dispersing agent having Tg of 0°C or lower is not particularly limited, but from the viewpoint of further improving the lamination strength of the image, Tg in the dispersing agent having a Tg of 0°C or lower is preferably -120°C or higher, more preferably -100°C or higher, and still more preferably -80°C or higher.

Weight-Average Molecular Weight (Mw)

A weight-average molecular weight (Mw) of the dispersing agent having a Tg of 0°C or lower is preferably 10K to 100K, more preferably 10K to 50K, and still more preferably 15K to 40K.

In a case where the weight-average molecular weight of the dispersing agent having a Tg of 0°C or lower is 10K or more, the storage stability of the ink is further improved.

In a case where the weight-average molecular weight of the dispersing agent having a Tg of 0°C or lower is 100K or less, the jettability of the ink is further improved.

Amine Value

The dispersing agent having a Tg of 0°C or lower preferably has an amine value.

From the viewpoint of dispersion stability of the pigment and storage stability of the ink, the amine value of the dispersing agent having a Tg of 0°C or lower is preferably 5.0 mgKOH/g to 60.0 mgKOH/g, more preferably 10.0 mgKOH/g to 50.0 mgKOH/g, and still more preferably 30.0 mgKOH/g to 45.0 mgKOH/g.

The type of the polymer (that is, the resin) constituting the dispersing agent having a Tg of 0°C or lower is preferably an acrylic resin.

In a case of preparing the ink according to the present disclosure, a single substance of the dispersing agent having a Tg of 0°C or lower (that is, the dispersing agent having a solid content of 100% by mass) may be used, or a solution of the dispersing agent having a Tg of 0°C or lower may be used.

Examples of a solvent in the solution include a monofunctional polymerizable monomer and an organic solvent.

Examples of the monofunctional polymerizable monomer as the solvent in the solution of the dispersing agent include phenoxyethyl acrylate.

Examples of the organic solvent as the solvent in the solution of the dispersing agent include n-butyl acetate and 1-methoxy-2-propyl acetate.

M1 and M2

In the ink according to the present disclosure, as described above, M1 (that is, the concentration of the dispersing agent having a Tg of 80°C or higher) and M2 (that is, the concentration of the dispersing agent having a Tg of 0°C or lower)

satisfy 0.20 ≤ M1/M2 (that is, M1/M2 is 0.20 or more).

In this manner, the lamination strength of the image is improved.

From the viewpoint of further improving the lamination strength of the image, M1/M2 is preferably 0.50 or more, more preferably 0.80 or more, and still more preferably 1.00 or more.

On the other hand, from the viewpoint of further improving the storage stability of the ink, M1/M2 is preferably 5.00 or less, more preferably 4.20 or less, still more preferably 2.20 or less, and even more preferably 1.60 or less.

As one of preferred aspects of M1/M2, a relationship of 0.50 ≤ M1/M2 ≤ 2.20 is exemplified.

M1 which is the concentration of the dispersing agent having a Tg of 80°C or higher in the ink (that is, the content (% by mass) with respect to the total amount of the ink) is preferably 0.05 to 1.00, more preferably 0.10 to 0.80, and still more preferably 0.20 to 0.60.

M2 which is the concentration of the dispersing agent having a Tg of 0°C or lower in the ink (that is, the content (% by mass) with respect to the total amount of the ink) is preferably 0.05 to 1.50, more preferably 0.10 to 1.20, and still more preferably 0.10 to 1.00.

In addition, M1 + M2 is preferably 0.20 to 1.50, more preferably 0.30 to 1.40, and still more preferably 0.40 to 1.20.

In a case where M1 + M2 is 0.20 or more, the storage stability of the ink is further improved.

In a case where M1 + M2 is 1.50 or less, the lamination strength of the image is further improved.

Coloring Pigment

The ink according to the present disclosure contains at least one coloring pigment.

The type of the coloring pigment is not particularly limited, and any of an organic pigment or an inorganic pigment may be used.

Examples of the pigment include pigments described in "Encyclopedia of Pigments" edited by Seishiro Ito (2000), "Industrial Organic Pigments", W. Herbst, K. Hunger, JP2002-12607A, JP2002-188025A, JP2003-26978A, and JP2003-342503A.

Examples of the coloring pigment include diketopyrrolopyrrole pigments (preferably, Pigment Red 254, Pigment Red 272, and Pigment Red 264; the same applies hereinafter), Pigment Violet 19, Pigment Yellow 120, Pigment Yellow 150, Pigment Yellow 151, Pigment Yellow 155, Pigment Red 122, Pigment Red 48:4, Pigment Yellow 180, Pigment Blue 15:4, and carbon black.

From the viewpoint of having red, magenta, or yellow color tone and viewpoint of excellent color forming, storage stability, and weather fastness, examples of the coloring pigment include diketopyrrolopyrrole pigments, Pigment Violet 19, Pigment Yellow 120, Pigment Yellow 150, Pigment Yellow 151, Pigment Yellow 155, Pigment Red 122, Pigment Red 48:4, Pigment Yellow 180, Pigment Blue 15:4, and carbon black.

In the ink according to the present disclosure, it is preferable that, in a case where a concentration of the coloring pigment (that is, the content (% by mass) of the coloring pigment with respect to the total amount of the ink) is indicated by Mp, the concentration of the dispersing agent having a Tg of 80°C or higher is indicated by M1, and the concentration of the dispersing agent having a Tg of 0°C or lower is indicated by M2, 0.20 ≤ Mp/(M1 + M2) ≤ 4.00 is satisfied (that is, Mp/(M1 + M2) is 0.20 to 4.00).

In a case where Mp/(M1 + M2) is 0.20 or more, the lamination strength is further improved. From the viewpoint of further improving the lamination strength, Mp/(M1 + M2) is preferably 0.50 or more, more preferably 1.00 or more, still more preferably 1.20 or more, and even more preferably 1.30 or more.

In a case where Mp/(M1 + M2) is 4.00 or less, the storage stability of the ink is further improved. From the viewpoint of further improving the storage stability of the ink, Mp/(M1 + M2) is preferably 3.5 or less.

As one of preferred aspects of Mp/(M1 + M2), a relationship of 1.00 ≤ Mp/(M1 + M2) ≤ 4.00 is exemplified.

Mp which is the concentration of the coloring pigment (that is, the content (% by mass) of the coloring pigment with respect to the total amount of the ink) is preferably 0.60 to 5.00, more preferably 0.80 to 4.00, and still more preferably 1.00 to 3.00.

Polymerizable Compound

The ink according to the present disclosure contains at least one polymerizable compound.

In the present disclosure, the polymerizable compound means a compound having a polymerizable group.

The polymerizable group is preferably an ethylenically unsaturated group (that is, a group including an ethylenic double bond), and more preferably a (meth)acryloyl group, an allyl group, a styryl group, or a vinyl group.

The polymerizable compound in the ink according to the present disclosure preferably contains at least one kind of a polymerizable monomer.

Here, the polymerizable monomer refers to a polymerizable compound having a molecular weight of 1,000 or less.

Here, the molecular weight is calculated based on the kind and the number of atoms constituting the compound.

Hereinafter, the polymerizable monomer may be simply referred to as "monomer".

The polymerizable compound in the ink according to the present disclosure may include a polymerizable compound having a molecular weight of more than 1,000, but it is preferable to include the polymerizable monomer as a main component.

More specifically, a proportion of the polymerizable monomer to the total amount of the polymerizable compound in the ink according to the present disclosure is preferably 60% by mass or more, more preferably 70% by mass or more, still more preferably 80% by mass or more, and even more preferably 100% by mass or more.

The proportion of the polymerizable monomer to the total amount of the polymerizable compound in the ink according to the present disclosure may be 100% by mass.

The content of the polymerizable monomer with respect to the total amount of the ink according to the present disclosure is preferably 50% by mass or more, more preferably 60% by mass or more, still more preferably 70% by mass or more, and even more preferably 80% by mass or more.

The polymerizable monomer which can be contained in the ink according to the present disclosure may include a monofunctional monomer, may include a bi- or higher functional monomer, or may include both.

Here, the monofunctional monomer means a polymerizable monomer having only one polymerizable group, and the bi- or higher functional monomer means a polymerizable monomer having two or more polymerizable groups.

That is, an n-functional monomer in the present disclosure is a polymerizable monomer having n polymerizable groups.

From the viewpoint of further improving the lamination strength, in the ink according to the present disclosure, a mass ratio of the amount of the monofunctional monomer to the total amount of the polymerizable monomers (hereinafter, also referred to as a content mass ratio [monofunctional monomer/total polymerizable monomer]) is preferably 0.80 or more, more preferably 0.85 or more, still more preferably 0.90 or more, and even more preferably 0.95 or more.

The content mass ratio [monofunctional monomer/total polymerizable monomer] may be 1, or less than 1.

The total content of the monofunctional monomer and the bifunctional monomer with respect to the total amount of the ink according to the present disclosure is preferably 50% by mass or more, more preferably 60% by mass or more, still more preferably 70% by mass or more, and even more preferably 80% by mass or more.

In addition, a content of the monofunctional monomer with respect to the total amount of the ink according to the present disclosure is preferably 50% by mass or more, more preferably 60% by mass or more, still more preferably 70% by mass or more, and even more preferably 80% by mass or more.

Monomer 1

It is preferable that the polymerizable compound in the ink according to the present disclosure contains a monomer 1 which is at least one selected from the group consisting of an N-vinyl compound and a (meth)acryloyl morpholine (ACMO).

Since the monomer 1 has high solubility in a base material for image recording, the monomer 1 contributes to adhesiveness between the base material for image recording and the image, and thus can contribute to the improvement of the lamination strength in the laminate.

The N-vinyl compound is a compound in which a vinyl group is bonded to a nitrogen atom.

The N-vinyl compound is preferably a monofunctional monomer.

Examples of the N-vinyl compound include N-vinylpyrrolidone (NVP), N-vinylcaprolactam (NVC), N-vinylcarbazole, N-vinylimidazole, N-vinylphthalimide, N-vinylacetamide, N-vinylformamide, and vinyl methyl oxazolidinone (that is, 5-methyl-3-vinyl-2-oxazolidinone) (VMOX).

A content of the monomer 1 with respect to the total amount of the ink is preferably 10% by mass or more, more preferably 15% by mass or more, still more preferably 16% by mass or more, and even more preferably 18% by mass or more.

The upper limit of the content of the monomer 1 with respect to the total amount of the ink is preferably 60% by mass or less, more preferably 50% by mass or less, still more preferably 40% by mass or less, and even more preferably 30% by mass or less.

Monomer 2

It is preferable that the polymerizable compound in the ink according to the present disclosure contains a monomer 2 which has a (meth)acryloyl group and at least one of an aliphatic ring structure or an aliphatic heterocyclic ring structure, has a molecular weight of 205 or less, and has a solubility parameter of 16.5 $MPa^{1/2}$ to 21.5 $MPa^{1/2}$.

The molecular weight of the monomer 2 being 205 or less refers to that the molecular weight is relatively low, and the ink is easily dissolved in the base material for image recording by setting the molecular weight to 205 or less. As a result,

the adhesiveness between the base material for image recording and the ink film is improved, and the lamination strength is improved.

In addition, in a case where the molecular weight of the monomer 2 is 205 or less, a distance between crosslinking points is shortened and a density of the ink film is improved, so that the lamination strength is improved.

The lower limit value of the molecular weight of the monomer 2 is not particularly limited, but is, for example, 100.

The molecular weight is calculated based on the kind and the number of atoms constituting the compound.

The solubility parameter (hereinafter, also referred to as an SP value) of the monomer 2 is 16.5 $MPa^{1/2}$ to 21.5 $MPa^{1/2}$, preferably 18 $MPa^{1/2}$ to 19.5 $MPa^{1/2}$.

Since the SP value of the monomer 2 is 16.5 $MPa^{1/2}$ to 21.5 $MPa^{1/2}$, the ink has high affinity for the base material for image recording and has excellent solubility. Polymerization proceeds in a state in which a part of the ink is dissolved in the base material for image recording, so that the adhesiveness between the base material for image recording and the image is improved, and as a result, the lamination strength is improved.

In the present disclosure, the SP value of the monomer 2 means a Hansen solubility parameter. The Hansen solubility parameters are obtained by dividing the solubility parameters introduced by Hildebrand into three components, a dispersion element δd, a polarity element δp, and a hydrogen bond element δh, and expressing the parameters in a three-dimensional space.

The SP value δ of the monomer 2 is a value calculated by the following expression (A).

$$\text{SP value } (\delta)\ [MPa^{1/2}] = (\delta d^2 + \delta p^2 + \delta h^2)^{1/2} \ldots \text{(A)}$$

The dispersion element δd, the polarity element δp, and the hydrogen bond element δh are calculated using HSPiP (version 4.1.07) software.

The monomer 2 has a (meth)acryloyl group (preferably an acryloyl group), and more preferably has a (meth) acryloyloxy group (preferably an acryloyloxy group).

The above-described monomer 1 has high activity with respect to a polymerizable monomer having a (meth) acryloyl group, and the polymerization reaction proceeds rapidly. Since the monomer 2 has a (meth)acryloyl group, the polymerization reaction proceeds rapidly in the ink in a case of coexisting with the above-described monomer 1, and thus curability is excellent.

The number of (meth)acryloyl groups in the monomer 2 may be only one or two or more, but is preferably only one (that is, the monomer 2 is preferably a monofunctional (meth)acrylate).

Examples of the monomer 2 include the following compounds.

Tetrahydrofurfuryl acrylate (SP value: 18.8 $MPa^{1/2}$)
Cyclic trimethylolpropane formal acrylate (SP value: 19.0 $MPa^{1/2}$)
Cyclohexyl acrylate (SP value: 17.9 $MPa^{1/2}$)
4-t-Butylcyclohexyl acrylate (SP value: 16.7 $MPa^{1/2}$)
3,3,5-Trimethylcyclohexyl acrylate (SP value: 16.7 $MPa^{1/2}$)
2-Methyl-2-ethyl-1,3-dioxolan-4-yl)methyl acrylate (SP value: 18.2 $MPa^{1/2}$)
(3-Ethoxytetan-3-yl)methyl acrylate (SP value: 18.6 $MPa^{1/2}$)
2-Oxotetrahydrofuran-3-yl acrylate (SP value: 21.2 $MPa^{1/2}$)

Among these, from the viewpoint of improving the adhesiveness to the base material for image recording and adhesiveness to a base material for lamination, the monomer 2 preferably includes at least one selected from the group consisting of tetrahydrofurfuryl acrylate, cyclohexyl acrylate, 3,3,5-trimethylcyclohexyl acrylate, and 4-t-butylcyclohexyl acrylate.

A content of the monomer 2 with respect to the total amount of the ink is preferably 25% by mass or more, more preferably 30% by mass or more, still more preferably 35% by mass or more, and even more preferably 40% by mass or more.

The content of the monomer 2 with respect to the total amount of the ink is preferably 70% by mass or less, more preferably 60% by mass or less, and still more preferably 50% by mass or less.

From the viewpoint of further improving the lamination strength, it is preferable that the polymerizable compound in the ink according to the present disclosure contains both the monomer 1 and the monomer 2.

In this case, from the viewpoint of further improving the lamination strength, the total content of the monomer 1 and the monomer 2 is preferably 40% by mass or more, more preferably 45% by mass or more, still more preferably 50% by mass or more, and even more preferably 60% by mass or more with respect to the total amount of the ink.

The upper limit of the total content of the monomer 1 and the monomer 2 varies depending on the content of other components contained in the ink, but the upper limit of the total content is, for example, 90% by mass, 80% by mass, 75%

by mass, and the like.

Other Polymerizable Monomers

The polymerizable compound in the ink according to the present disclosure may contain a polymerizable monomer other than the monomer 1 and the monomer 2, as other polymerizable monomers.
A polymerizable group included in the other polymerizable monomers is preferably a radically polymerizable group, more preferably a photoradically polymerizable group, and still more preferably an ethylenically unsaturated group.
Examples of the other polymerizable monomers include a (meth)acrylate compound, a (meth)acrylamide compound, a vinyl ether compounds, an allyl compound, and an unsaturated carboxylic acid.

Monomer 3

From the viewpoint of further improving the lamination strength by crosslinking, it is preferable that the polymerizable compound in the ink according to the present disclosure contains a monomer 3 which is a polymerizable monomer having two or more ethylenically unsaturated groups (that is, a bi- or higher functional polymerizable monomer).
The monomer 3 is preferably a polymerizable monomer having two or more (meth)acryloyl groups (that is, a bi- or higher functional (meth)acrylate), and more preferably a polymerizable monomer having two (meth)acryloyl groups (that is, a bifunctional (meth)acrylate).
Examples of the bifunctional (meth)acrylate, which is the preferred aspect of the monomer 3, include ethylene glycol di(meth)acrylate, diethylene glycol di(meth)acrylate, triethylene glycol di(meth)acrylate, propylene glycol di(meth)acrylate, dipropylene glycol di(meth)acrylate, tripropylene glycol di(meth)acrylate, polyethylene glycol di(meth)acrylate, polypropylene glycol di(meth)acrylate, butylene glycol di(meth)acrylate, tetraethylene glycol di(meth)acrylate, neopentyl glycol di(meth)acrylate, 3-methyl-1,5-pentanediol di(meth)acrylate, hexanediol di(meth)acrylate, heptanediol di(meth)acrylate, octanediol di(meth)acrylate, nonanediol di(meth)acrylate, decanediol di(meth)acrylate, dodecanediol di(meth)acrylate, 1,6-hexanediol di(meth)acrylate, glycerin di(meth)acrylate, pentaerythritol di(meth)acrylate, ethylene glycol diglycidyl ether di(meth)acrylate, diethylene glycol diglycidyl ether di(meth)acrylate, and tricyclodecanedimethanol di(meth)acrylate.
From the viewpoint of further improving the lamination strength, in a case where the ink according to the present disclosure contains the monomer 3, a content of the monomer 3 is preferably 20% by mass or less, more preferably 10% by mass or less, still more preferably 5% by mass or less, and even more preferably 2.5% by mass or less with respect to the total amount of the ink.
From the viewpoint of further improving the lamination strength, the content of the monomer 3 is preferably more than 0% by mass, more preferably 0.01% by mass or more, still more preferably 0.05% by mass or more, and even more preferably 0.1% by mass or more.
Examples of a preferred aspect of the ink according to the present disclosure include an aspect in which the polymerizable compound in the ink according to the present disclosure contains the monomer 1, the monomer 2, and the monomer 3, the total content of the monomer 1 and the monomer 2 is 50% by mass or more with respect to the total amount of the ink, and the content of the monomer 3 is more than 0% by mass and 20% by mass or less with respect to the total amount of the ink.

Content Mass Ratio [Monomer having molecular weight of 205 or less/Total polymerizable monomer]

From the viewpoint of further improving the lamination strength, in the ink according to the present disclosure, a mass ratio of the amount of the polymerizable monomer having a molecular weight of 205 or less to the total amount of the polymerizable monomers contained in the ink (hereinafter, also referred to as a content mass ratio [monomer having molecular weight of 205 or less/total polymerizable monomer]) is preferably 0.80 or more, more preferably 0.85 or more, still more preferably 0.90 or more, and even more preferably 0.95 or more.
The content mass ratio [monomer having molecular weight of 205 or less/total polymerizable monomer] may be 1, or less than 1.

Weighted Average Value of Tg

In the ink according to the present disclosure, a weighted average value of the glass transition temperatures (weighted average value of Tg) of homopolymers of the polymerizable monomers is preferably 0°C to 50°C.
In the present disclosure, the weighted average value of the glass transition temperatures (weighted average value of Tg) of homopolymers of the polymerizable monomers means a weighted average value of glass transition temperatures in a case where all kinds of the polymerizable monomers contained in the ink according to the present

disclosure are homopolymers.

For example, in a case where the ink according to the present disclosure contains two or more kinds of the polymerizable monomers, the weighted average value of Tg means a weighted average value of glass transition temperatures in a case where each of the two or more kinds of the polymerizable monomers is a homopolymer.

In a case where the ink according to the present disclosure contains only one kind of the polymerizable monomer, the weighted average value of Tg means the glass transition temperature itself in a case where the one kind of the polymerizable monomer is a homopolymer.

The weighted average value of Tg in the ink according to the present disclosure means a value measured as follows.

A homopolymer having a weight-average molecular weight of 10,000 to 20,000 is produced for each of all (that is, all kinds of) polymerizable monomers contained in the ink, and the glass transition temperature of the produced homopolymer is measured according to the method described in JIS K 7121:2012.

In the present disclosure, the glass transition temperature is measured using a differential scanning calorimeter, for example, using a product name "DSC-60" manufactured by Shimadzu Corporation.

In the present disclosure, the weight-average molecular weight is measured by gel permeation chromatography (GPC). For example, HLC-8220GPC (manufactured by Tosoh Corporation) is used as GPC, three columns of TSKgel, SuperMultipore HZ-H (manufactured by Tosoh Corporation; 4.6 mmID x 15 cm) are used as a column, and tetrahydrofuran (THF) is used as an eluent. As the conditions, a sample concentration of 0.45% by mass, a flow rate of 0.35 ml/min, a sample injection amount of 10 μl, and a measurement temperature of 40°C are set, and a differential refractive index (RI) detector is used for detection. A calibration curve is obtained from, as a standard sample, eight samples of product names "TSK Standard polystyrene" manufactured by Tosoh Corporation: "F-40", "F-20", "F-4", "F-1", "A-5000", "A-2500", "A-1000", and "n-propylbenzene".

The glass transition temperature of the homopolymer varies depending on the weight-average molecular weight of the homopolymer, but the variation is negligibly small in a case where the weight-average molecular weight is 10,000 to 20,000.

The weighted average value of Tg is calculated by the following expression.

In the expression, $T_i$ represents a glass transition temperature in a case where an i-th polymerizable monomer contained in the ink is a homopolymer, and $C_i$ represents a content (% by mass) of the i-th polymerizable monomer with respect to the total amount of the ink.

Weighted average value of glass transition temperatures = $\Sigma T_i C_i / \Sigma C_i$

As described above, in a case where the weighted average value of Tg is 0°C or higher, blocking resistance of the image is improved.

From the viewpoint of further improving the blocking resistance of the image, the weighted average value of Tg is preferably 5°C or higher, more preferably 10°C or higher, and still more preferably 15°C or higher.

In addition, as described above, in a case where the weighted average value of Tg is 50°C or lower, the lamination strength of the image is improved.

From the viewpoint of further improving the lamination strength of the image, the weighted average value of Tg is preferably 45°C or lower and more preferably 40°C or lower.

From the viewpoint of more effectively achieving both the lamination strength and the blocking resistance, it is preferable that the polymerizable monomer in the ink according to the present disclosure includes a monomer M1 having a glass transition temperature of 90°C or higher in a case of being homopolymerized and a monomer M2 having a glass transition temperature of 30°C or lower in a case of being homopolymerized.

In a case where the ink according to the present disclosure contains the monomer M1, a content of the monomer M1 with respect to the total amount of the ink is preferably 20% by mass to 50% by mass.

In a case where the ink according to the present disclosure contains the monomer M2, a content of the monomer M2 with respect to the total amount of the ink is preferably 35% by mass to 65% by mass.

Polymerization Initiator

The ink according to the present disclosure preferably contains at least one polymerization initiator.

As the polymerization initiator, a photoradical polymerization initiator which absorbs light to generate a radical as a polymerization initiation species is preferable.

Examples of the polymerization initiator include an alkylphenone compound, an acylphosphine compound, an aromatic onium salt compound, an organic peroxide, a hexaarylbiimidazole compound, a ketoxime ester compound, a borate compound, an azinium compound, a metallocene compound, an active ester compound, a carbon halogen bond-containing compound, and an alkylamine compound.

In a case where the ink according to the present disclosure contains a polymerization initiator, from the viewpoint of improving the curing properties of the ink, a content of the polymerization initiator is preferably 2.0% by mass or more and

more preferably 5.0% by mass or more with respect to the total amount of the ink. The upper limit of the content of the polymerization initiator is not particularly limited, but for example, it is 10.0% by mass.

α-Aminoketone-type Photopolymerization Initiator

The ink according to the present disclosure preferably contains at least one α-aminoketone-type photopolymerization initiator.

In the present disclosure, the α-aminoketone-type photopolymerization initiator is a photopolymerization initiator having an α-aminoketone structure.

The α-aminoketone structure refers to the following structure (AK) which is a structure in which an amino group is bonded to a carbon atom at an α-position of a ketone group.

In the structure (AK), * represents a bonding position.

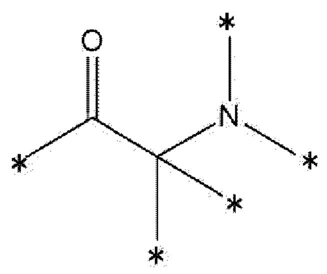

(AK)

A content of the α-aminoketone-type photopolymerization initiator with respect to the total amount of the ink according to the present disclosure is preferably 0.010% by mass to 8.0% by mass, preferably 0.1% by mass to 5.0% by mass, more preferably 0.5% by mass to 4.0% by mass, and still more preferably 1.0% by mass to 3.5% by mass.

As the α-aminoketone-type photopolymerization initiator, an α-aminoketone-type photopolymerization initiator having a molecular weight of 600 or more is preferable.

In this manner, curing properties in the vicinity of a surface of the ink film (that is, an interface with the air) are improved.

The α-aminoketone-type photopolymerization initiator having a molecular weight of 600 or more preferably further has a polyalkyleneoxy group, more preferably has a polyalkyleneoxy group obtained by linking alkyleneoxy groups having 2 to 4 carbon atoms, and still more preferably has at least one of a polyethyleneoxy group or a polypropyleneoxy group.

The α-aminoketone-type photopolymerization initiator having a molecular weight of 600 or more preferably further has an aromatic ring structure.

The molecular weight of the α-aminoketone-type photopolymerization initiator having a molecular weight of 600 or more is preferably 800 or more.

The molecular weight of the α-aminoketone-type photopolymerization initiator having a molecular weight of 600 or more is preferably 1,800 or less.

For the structure of the α-aminoketone-type photopolymerization initiator having a molecular weight of 600 or more, for example, known documents such as JP2009-197066A, WO2017/195428A, and JP2007-525573A can be referred to.

The α-aminoketone-type photopolymerization initiator having a molecular weight of 600 or more is, for example, a compound represented by Formula (AK1).

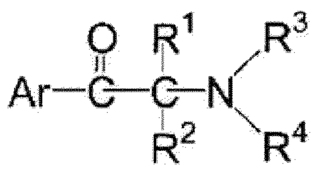

(AK1)

In Formula (AK1), Ar is a phenyl group substituted with $-N(R^5)(R^6)$ or $-C(=O)-N(R^5)(R^6)$.

$R^1$ and $R^2$ each independently represent an alkyl group having 1 to 8 carbon atoms. $R^1$ and $R^2$ may be bonded to each other to constitute an alkylene group having 2 to 9 carbon atoms. $R^3$ and $R^4$ each independently represent a hydrogen atom, an alkyl group having 1 to 12 carbon atoms, an alkyl group having 2 to 4 carbon atoms, substituted with

alkoxy having 1 to 4 carbon atoms, or an alkenyl group having 3 to 5 carbon atoms. Here, $R^3$ and $R^4$ may be bonded to each other to form an alkylene group having 3 to 7 carbon atoms, and the alkylene group may include -O- or -N($R^7$)- in an alkylene chain, where $R^7$ represents an alkyl group having 1 to 4 carbon atoms.

$R^5$ and $R^6$ each independently represent a hydrogen atom, an alkyl group having 1 to 12 carbon atoms, an alkyl group having 2 to 4 carbon atoms, substituted with alkoxy having 1 to 4 carbon atoms, or an alkenyl group having 3 to 5 carbon atoms. Here, $R^5$ and $R^6$ may be bonded to each other to form an alkylene group having 3 to 7 carbon atoms, and the alkylene group may include -O- or -N($R^{11}$)- in an alkylene chain. Here, $R^{11}$ is a hydrogen atom, a hydroxyalkyl group having 1 to 4 carbon atoms, or a group represented by Formula (R11A).

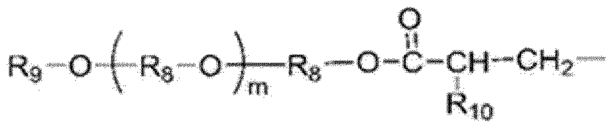

(R11A)

In Formula (R11A), $R^8$ represents an alkylene group having 2 to 4 carbon atoms, $R^9$ represents a hydrogen atom, a phenyl group, or an alkyl group having 1 to 4 carbon atoms, $R^{10}$ represents a hydrogen atom or a methyl group, and m represents an integer of 0 to 20.

In a case where the ink according to the present disclosure contains at least one α-aminoketone-type photopolymerization initiator having a molecular weight of less than 600, the ink may further contain at least one α-aminoketone-type photopolymerization initiator having a molecular weight of less than 600.

However, in this case, a mass ratio of a content of the α-aminoketone-type photopolymerization initiator having a molecular weight of less than 600 to a content of the α-aminoketone-type photopolymerization initiator having a molecular weight of 600 or more is preferably less than 1, more preferably less than 0.5, still more preferably less than 0.1, and even more preferably less than 0.01.

Acylphosphine Oxide-type Photopolymerization Initiator

The ink according to the present disclosure preferably contains at least one acylphosphine oxide-type photopolymerization initiator.

As a result, the lamination strength of the image is further improved.

Examples of the acylphosphine oxide-type photopolymerization initiator include a monoacylphosphine oxide compound and a bisacylphosphine oxide compound, and a bisacylphosphine oxide compound is preferable.

Examples of the monoacylphosphine oxide compound include isobutyryl diphenylphosphine oxide, 2-ethylhexanoyldiphenylphosphine oxide, 2,4,6-trimethylbenzoyldiphenylphosphine oxide, (2,4,6-trimethylbenzoyl)ethoxyphenylphosphine oxide, o-toluyldiphenylphosphine oxide, p-t-butylbenzoyldiphenylphosphine oxide, 3-pyridylcarbonyldiphenylphosphine oxide, acryloyl diphenylphosphine oxide, benzoyl diphenylphosphine oxide, pivaloyl phenylphosphinic acid vinyl ester, adipoyl bisdiphenylphosphine oxide, pivaloyl diphenylphosphine oxide, p-toluyldiphenylphosphine oxide, 4-(t-butyl)benzoyldiphenylphosphine oxide, terephthaloyl bisdiphenylphosphine oxide, 2-methylbenzoyldiphenylphosphine oxide, versatoyl diphenylphosphine oxide, 2-methyl-2-ethylhexanoyldiphenylphosphine oxide, 1-methyl-cyclohexanoyldiphenylphosphine oxide, pivaloyl phenylphosphinic acid methyl ester, and pivaloyl phenylphosphinic acid isopropyl ester.

Examples of the bisacylphosphine oxide compound include bis(2,6-dichlorobenzoyl)phenylphosphine oxide, bis(2,6-dichlorobenzoyl)-2,5-dimethylphenylphosphine oxide, bis(2,6-dichlorobenzoyl)-4-ethoxyphenylphosphine oxide, bis(2,6-dichlorobenzoyl)-4-propylphenylphosphine oxide, bis(2,6-dichlorobenzoyl)-2-naphthylphosphine oxide, bis(2,6-dichlorobenzoyl)-1-naphthylphosphine oxide, bis(2,6-dichlorobenzoyl)-4-chlorophenylphosphine oxide, bis(2,6-dichlorobenzoyl)-2,4-dimethoxyphenylphosphine oxide, bis(2,6-dichlorobenzoyl)decylphosphine oxide, bis(2,6-dichlorobenzoyl)-4-octylphenylphosphine oxide, bis(2,4,6-trimethylbenzoyl)phenylphosphine oxide, bis(2,4,6-trimethylbenzoyl)-2,5-dimethylphenylphosphine oxide, bis(2,6-dichloro-3,4,5-trimethoxybenzoyl)-2,5-dimethylphenylphosphine oxide, bis(2,6-dichloro-3,4,5-trimethoxybenzoyl)-4-ethoxyphenylphosphine oxide, bis(2-methyl-1-naphthoyl)-2,5-dimethylphenylphosphine oxide, bis(2-methyl-1-naphthoyl)-4-ethoxyphenylphosphine oxide, bis(2-methyl-1-naphthoyl)-2-naphthylphosphine oxide, bis(2-methyl-1-naphthoyl)-4-propylphenylphosphine oxide, bis(2-methyl-1-naphthoyl)-2,5-dimethylphenylphosphine oxide, bis(2-methoxy-1-naphthoyl)-4-ethoxyphenylphosphine oxide, bis(2-chloro-1-naphthoyl)-2,5-dimethylphenylphosphine oxide, and bis(2,6-dimethoxybenzoyl)-2,4,4-trimethylpentylphosphine oxide.

Among these, as the acylphosphine oxide-type photopolymerization initiator, it is preferable to include at least one selected from the group consisting of bis(2,4,6-trimethylbenzoyl)phenylphosphine oxide (product name "Omnirad 819", manufactured by IGM Resins B.V.) and 2,4,6-trimethylbenzoyldiphenylphosphine oxide (product name "Omnirad TPO-H", manufactured by IGM Resins B.V.).

A content of the acylphosphine oxide-type photopolymerization initiator with respect to the total amount of the ink according to the present disclosure is preferably 0.5% by mass to 8.0% by mass, more preferably 1.0% by mass to 6.0% by mass, and still more preferably 2.0% by mass to 5.0% by mass.

It is preferable that the ink according to the present disclosure contains the α-aminoketone-type photopolymerization initiator (preferably, the α-aminoketone-type photopolymerization initiator having a molecular weight of 600 or more; the same applies hereinafter) and the acylphosphine oxide-type photopolymerization initiator.

In this case, a content mass ratio of the α-aminoketone-type photopolymerization initiator to the acylphosphine oxide-type photopolymerization initiator (hereinafter, also referred to as a content mass ratio [α-aminoketone-type initiator/acylphosphine oxide-type initiator]) is preferably 0.005 to 2.0, more preferably 0.010 to 1.5, still more preferably 0.020 to 1.5, and even more preferably 0.3 to 1.5.

Sensitizing Dye

It is preferable that the ink according to the present disclosure contains at least one sensitizing dye.

As a result, the lamination strength of the image is further improved.

A content mass ratio of the sensitizing dye to the acylphosphine oxide-type photopolymerization initiator (hereinafter, also referred to as a content mass ratio [sensitizing dye/acylphosphine oxide-type initiator]) is preferably 0.02 to 3.0, more preferably 0.1 to 2.0, and still more preferably 0.3 to 2.0.

In a case where the content mass ratio [sensitizing dye/acylphosphine oxide-type initiator] is 0.02 or more, the blocking resistance of the image is further improved.

In a case where the content mass ratio [sensitizing dye/acylphosphine oxide-type initiator] is 3.0 or less, the lamination strength of the image is further improved.

As the sensitizing dye, a thio compound is preferable, and a thioxanthone compound is more preferable.

Examples of the thioxanthone compound include thioxanthone, 2-isopropylthioxanthone, 4-isopropylthioxanthone, 2-chlorothioxanthone, 2,4-dichlorothioxanthone, 2-dodecylthioxanthone, 2,4-diethylthioxanthone (preferably, 2,4-diethylthioxanthen-9-one (DETX)), 2,4-dimethylthioxanthone, 1-methoxycarbonylthioxanthone, 2-ethoxycarbonylthioxanthone, 3-(2-methoxyethoxycarbonyl)thioxanthone, 4-butoxycarbonylthioxanthone, 3-butoxycarbonyl-7-methylthioxanthone, 1-cyano-3-chlorothioxanthone, 1-ethoxycarbonyl-3-chlorothioxanthone, 1-ethoxycarbonyl-3-ethoxythioxanthone, 1-ethoxycarbonyl-3-aminthioxanthone, 1-ethoxycarbonyl-3-phenylsulfurylthioxanthone,Examples thereof include 3,4-di[2-(2-methoxyethoxy)ethoxycarbonyl]thioxanthone, 1-ethoxycarbonyl-3-(1-methyl-1-morpholinoethyl)thioxanthone, 2-methyl-6-dimethoxymethylthioxanthone, 2-methyl-6-(1,1-dimethoxybenzyl)thioxanthone, 2-morpholinomethylthioxanthone, 2-methyl-6-morpholinomethylthioxanthone, n-allylthioxanthone-3,4-dicarboxylimide, n-octylthioxanthone-3,4-dicarboxylimide, N-(1,1,3,3-tetramethylbutyl)thioxanthone-3,4-dicarboxylimide, 1-phenoxythioxanthone, 6-ethoxycarbonyl-2-methoxythioxanthone, 6-ethoxycarbonyl-2-methylthioxanthone, thioxanthone-2-polyethylene glycol ester, and 2-hydroxy-3-(3,4-dimethyl-9-oxo-9H-thioxanthone-2-yl)oxy-N,N,N-trimethyl-1-propanamini um chloride.

The thioxanthone compound may be a commercially available product. Examples of the commercially available product include SPEEDCURE series (for example, SPEEDCURE 7010, SPEEDCURE CPTX, SPEEDCURE ITX, and the like) manufactured by Lambson.

Resin

The ink preferably contains at least one resin.

In the present disclosure, the "resin" does not have a polymerizable group.

In the present disclosure, the resin having a polymerizable group corresponds to the "polymerizable compound" and is distinguished from the resin.

In addition, the resin means a compound having a weight-average molecular weight of 1,000 or more.

Examples of the resin include an epoxy resin, a vinyl chloride-based resin, a polyester resin, an acrylic resin, a urethane resin, chlorinated polyolefin, and polyketone.

The vinyl chloride-based resin means a polymer including vinyl chloride as a constitutional unit. The vinyl chloride-based resin may be a homopolymer of vinyl chloride (that is, polyvinyl chloride), or may be a copolymer including vinyl chloride and a monomer other than the vinyl chloride as a constitutional unit.

Examples of a commercially available product of the vinyl chloride-based resin include UCAR Solution Vinyl Resin VYHD, VYHH, VMCA, VROH, and VYLF-X manufactured by Dow Chemical Company; SOLBIN resin CL, CNL, C5R, and TA5R manufactured by Nissin Chemical Co., Ltd.; and VINNOL (registered trademark) E15/40, E15/45, H14/36, H15/42, H15/50, H11/59, H40/43, H40/50, H40/55, H40/60, H15/45M, E15/45M, and E15/40A manufactured by Wacker Chemie AG

Examples of a commercially available product of the polyester resin include Elitel series manufactured by

UNITIKA Ltd.; VYLON series manufactured by TOYOBO Co., Ltd.; Espel series manufactured by Hitachi Chemical Co., Ltd.; and TEGO (registered trademark) addbond series manufactured by Evonik Industries AG.

Examples of the acrylic resin include a copolymer of methyl methacrylate and n-butyl methacrylate.

Examples of a commercially available product of the acrylic resin include Elvacite 2013 (a copolymer of methyl methacrylate and n-butyl methacrylate, Mw = 34,000), Elvacite 2014 (a copolymer of methyl methacrylate and n-butyl methacrylate, Mw = 119,000), and Elvacite 4099 (a copolymer of methyl methacrylate and n-butyl methacrylate, Mw = 15,000) manufactured by Lucite International Alpha B.V; and DIANAL (registered trademark) BR-113 (butyl methacrylate resin, Mw = 30,000) manufactured by Mitsubishi Chemical Corporation.

The urethane resin means a polymer having a urethane bond in the main chain. The urethane resin is produced, for example, by reacting a polyisocyanate compound with a polyol compound.

Examples of a commercially available product of the chlorinated polyolefin include SUPERCHLON (registered trademark) 814HS manufactured by Nippon Paper Industries Co., Ltd.

Examples of a commercially available product of the polyketone include TEGO (registered trademark) VARIPLUS AP, CA, and SK manufactured by Evonik Industries AG

Among these, the ink preferably contains at least one selected from the group consisting of a vinyl chloride-vinyl acetate copolymer and a polyester resin. The vinyl chloride-vinyl acetate copolymer and the polyester resin have excellent affinity for the base material for image recording, and in a case where the ink contains these resins, the solubility of the ink in the base material for image recording is increased, and the adhesiveness between the base material for image recording and the image is improved.

Resin T

The ink according to the present disclosure preferably contains a resin T including at least one group selected from the group consisting of a fluorinated hydrocarbon group, a polysiloxane group, and a hydrocarbon group having 12 or more carbon atoms.

As a result, the solubility of the ink in the base material for image recording is high, and the adhesiveness between the base material for image recording and the image is improved.

The resin T is preferably an acrylic resin.

It is preferable that the resin T as the acrylic resin contains a constitutional unit A derived from a polymerizable compound A including at least one selected from the group consisting of a fluorinated hydrocarbon group, a polysiloxane group, and a hydrocarbon group having 12 or more carbon atoms, and contains a constitutional unit B derived from a polymerizable compound B having a polarity element of an HSP value of 4.8 $MPa^{1/2}$ or more.

Constitutional unit A

It is preferable that the resin T contains the constitutional unit A derived from the polymerizable compound A including at least one selected from the group consisting of a fluorinated hydrocarbon group, a polysiloxane group, and a hydrocarbon group having 12 or more carbon atoms. In this case, the resin T may contain only one kind of the constitutional unit A, or two or more kinds of constitutional units A.

A content of the constitutional unit A is 40% by mass or less with respect to the total amount of the resin T.

The content of the constitutional unit A is preferably more than 0% by mass with respect to the total amount of the resin T.

The fluorinated hydrocarbon group, the polysiloxane group, and the hydrocarbon group having 12 or more carbon atoms have low cohesive energy, and thus the resin T containing these groups is likely to be unevenly distributed at the gas-liquid interface of the ink. As a result, in a case where the ink is cured to form the ink film, the resin T can exist on the surface of the ink film more than a colorant (for example, a pigment) which can be contained in the ink, and the adhesiveness between the ink film (that is, the image) and the base material for lamination can be improved.

From the viewpoint of unevenly dispersing the resin T on the surface of the ink film and improving blocking resistance, the content of the constitutional unit A is preferably 1% by mass or more, more preferably 3% by mass or more, and still more preferably 5% by mass or more.

On the other hand, from the viewpoint of improving the affinity with the base material for lamination and improving the blocking resistance, the content of the constitutional unit A is preferably 37% by mass or less, more preferably 32% by mass or less, and still more preferably 25% by mass or less.

The fluorinated hydrocarbon group means a hydrocarbon group substituted with at least one fluorine atom.

Examples of the fluorinated hydrocarbon group include a fluorinated alkyl group, a fluorinated alkenyl group, and a fluorinated aryl group.

As the fluorinated hydrocarbon group, a fluorinated alkyl group is preferable, and a perfluoroalkyl group is particularly preferable.

The number of fluorine atoms in the fluorinated hydrocarbon group is preferably 6 or more and more preferably 8 or more. The upper limit of the number of fluorine atoms in the fluorinated hydrocarbon group is not particularly limited, and examples thereof include 40.

The number of carbon atoms in the fluorinated hydrocarbon group is preferably 3 or more and more preferably 4 or more. The upper limit of the number of carbon atoms in the fluorinated hydrocarbon group is not particularly limited, and examples thereof include 20.

Examples of the hydrocarbon group having 12 or more carbon atoms include an alkyl group, an alkenyl group, an aryl group, an alkylaryl group, and an aralkyl group. As the hydrocarbon group having 12 or more carbon atoms, an alkyl group is particularly preferable.

The number of carbon atoms in the hydrocarbon group having 12 or more carbon atoms is preferably 14 or more and more preferably 16 or more.

The upper limit of the number of carbon atoms in the hydrocarbon group having 12 or more carbon atoms is not particularly limited, and examples thereof include 30.

The polysiloxane group means a divalent group including a repetition of an Si-O bond. The constitutional unit A more preferably includes a monovalent group including a polysiloxane group.

Examples of the monovalent group including a polysiloxane group include the following group (P).

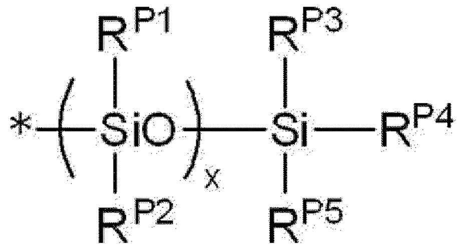

(P)

In the group (P), $R^{P1}$ and $R^{P2}$ each independently represent a hydrocarbon group having 1 to 6 carbon atoms or the following group (Z), $R^{P3}$ to $R^{P5}$ each independently represent a hydrocarbon group having 1 to 6 carbon atoms, x represents an integer of 1 to 100, and * represents a bonding position.

In a case where x is an integer of 2 or more, a plurality of $R^{P1}$'s may be the same or different from each other, and a plurality of $R^{P2}$'s may be the same or different from each other.

In the group (P), the number of Si-O bonds (that is, siloxane bonds) is 2 or more.

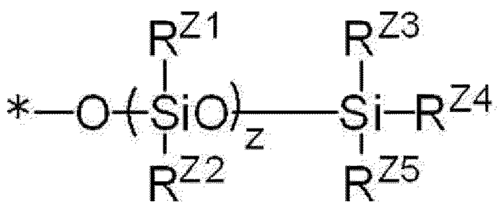

(Z)

In the group (Z), $R^{Z1}$ to $R^{Z5}$ each independently represent a hydrocarbon group having 1 to 6 carbon atoms, z represents an integer of 0 to 100, and * represents a bonding position.

In a case where z is an integer of 2 or more, a plurality of $R^{Z1}$'s may be the same or different from each other, and a plurality of $R^{Z2}$'s may be the same or different from each other.

x in the group (P) is preferably an integer of 1 to 50, more preferably an integer of 1 to 20, and particularly preferably an integer of 1 to 10.

In the group (P), as the hydrocarbon groups having 1 to 6 carbon atoms in $R^{P1}$ to $R^{P5}$, a methyl group, an ethyl group, an n-butyl group, or a phenyl group is preferable, a methyl group, an n-butyl group, or a phenyl group is more preferable, and a methyl group an n-butyl group is particularly preferable.

z in the group (Z) is preferably an integer of 0 to 50, more preferably an integer of 0 to 20, and particularly preferably an integer of 0 to 10.

In the group (Z), as the hydrocarbon groups having 1 to 6 carbon atoms in $R^{Z1}$ to $R^{Z5}$, a methyl group, an ethyl group, or a phenyl group is preferable, a methyl group or a phenyl group is more preferable, and a methyl group is particularly preferable.

Examples of the constitutional unit A include a constitutional unit derived from a vinyl monomer (for example,

(meth)acrylic acid ester, (meth)acrylamide, and the like).

The constitutional unit A is preferably a constitutional unit derived from (meth)acrylic acid ester, and more preferably a constitutional unit represented by Formula (A1).

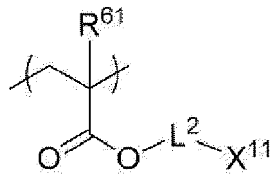

(A1)

In the constitutional unit (A1), $R^{61}$ represents a hydrogen atom or a methyl group, $L^2$ represents a single bond or a linking group, and $X^{11}$ represents a fluorinated hydrocarbon group, a monovalent group including a polysiloxane group, or a hydrocarbon group having 12 or more carbon atoms.

The preferred aspects of the fluorinated hydrocarbon group, the monovalent group including a polysiloxane group, and the hydrocarbon group having 12 or more carbon atoms in $X^{11}$ are as described above, respectively.

$R^{61}$ represents a hydrogen atom or a methyl group, and a methyl group is preferable.

As the linking group represented by $L^2$, a divalent hydrocarbon group having 1 to 11 carbon atoms (more preferably having 2 to 11 carbon atoms and still more preferably having 2 to 8 carbon atoms) is preferable.

The above-described divalent hydrocarbon group may have a substituent such as a hydroxy group and an alkoxy group.

Examples of the above-described divalent hydrocarbon group include an alkylene group, an alkenylene group, an arylene group, an alkylenearylene group, an alkylenearylenealkylene group, an alkylene carbonyloxyalkylene group, and an arylene carbonyloxyalkylene group.

As the above-described divalent hydrocarbon group, an alkylene group having 1 to 11 carbon atoms (more preferably having 1 to 6 carbon atoms) is particularly preferable.

Specific examples of the constitutional unit represented by Formula (A1) are as follows.

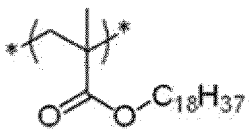
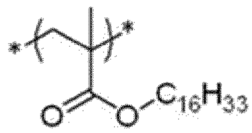
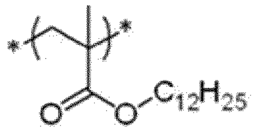

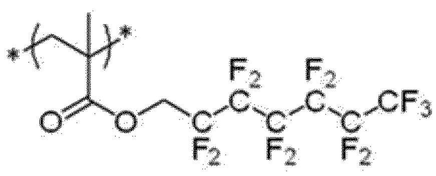
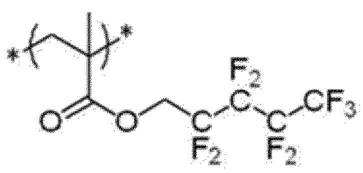
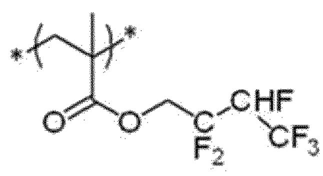

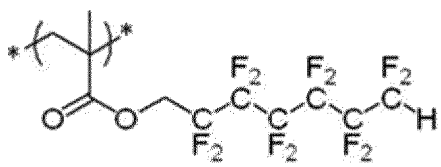
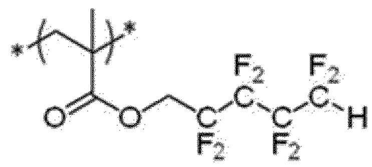

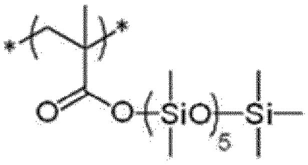
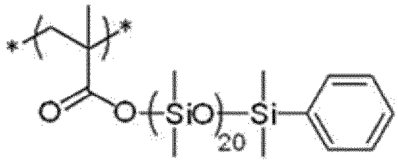

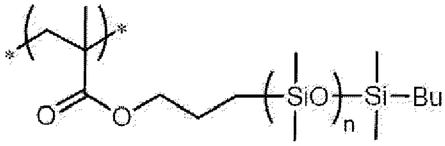

n=1~140

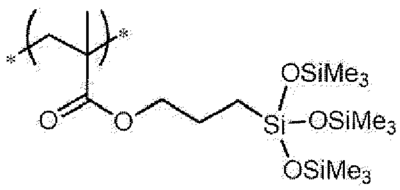

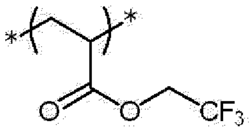
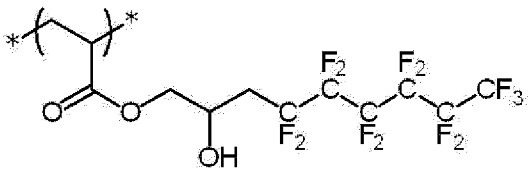
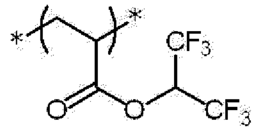

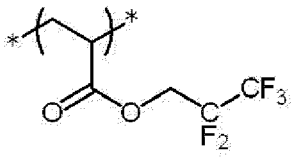
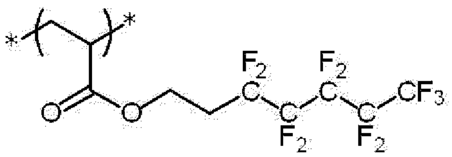

The constitutional unit A is a constitutional unit derived from the polymerizable compound A, and can be introduced into the resin T by using the polymerizable compound A as a raw material.

The polymerizable compound A may be a commercially available product.

Examples of the commercially available product include X-22-174ASX, X-22-174BX, KF-2012, X-22-2426, and X-22-2404 (manufactured by Shin-Etsu Chemical Co., Ltd.); FM00711, FM-0721, FM-0725, and TM-0701T (manufactured by JNC Corporation); and VISCOAT 3F and VISCOAT 13F (manufactured by Osaka Organic Chemical Industry Ltd.).

Among these, from the viewpoint of further improving the adhesiveness to the base material for lamination, the polymerizable compound A is preferably a polymerizable compound including at least one selected from the group consisting of a fluorinated hydrocarbon group and a polysiloxane group.

In a case where a number-average molecular weight (Mn) of the polymerizable compound A is increased, the effect of unevenly dispersing the resin T on the surface is enhanced, and peelability is enhanced. From the viewpoint of further improving the adhesiveness to the base material for lamination, the number-average molecular weight of the polymerizable compound A is preferably 5,000 or less and more preferably 3,000 or less. On the other hand, from the viewpoint of blocking resistance, the number-average molecular weight of the polymerizable compound A is preferably 400 or more and more preferably 700 or more.

In the present disclosure, the number-average molecular weight is measured by gel permeation chromatography (GPC). For example, HLC-8220GPC (manufactured by Tosoh Corporation) is used as GPC, three columns of TSKgel, SuperMultipore HZ-H (manufactured by Tosoh Corporation; 4.6 mmID x 15 cm) are used as a column, and tetrahydrofuran (THF) is used as an eluent. As the conditions, a sample concentration of 0.45% by mass, a flow rate of 0.35 ml/min, a sample injection amount of 10 μl, and a measurement temperature of 40°C are set, and a differential refractive index (RI) detector is used for detection. A calibration curve is obtained from, as a standard sample, eight samples of product names "TSK Standard polystyrene" manufactured by Tosoh Corporation: "F-40", "F-20", "F-4", "F-1", "A-5000", "A-2500", "A-1000", and "n-propylbenzene".

In a case where a molecular weight of the polymerizable compound A is 1,000 or less, the molecular weight is calculated from the type and the number of atoms constituting the polymerizable compound A.

Constitutional unit B

The resin T contains a constitutional unit B derived from a polymerizable compound B having a polarity element of an HSP value of 4.8 $MPa^{1/2}$ or more. The resin T may contain only one kind of the constitutional unit B, or two or more kinds of constitutional units B.
A content of the constitutional unit B is 15% by mass or more with respect to the total amount of the resin T.
Since the resin T contains the constitutional unit A in addition to the constitutional unit B, the content of the constitutional unit B is less than 100% by mass with respect to the total amount of the resin T.
Since the vinyl chloride has a large polarity element of HSP value, in a case where the resin T contains 15% by mass or more of the constitutional unit B derived from a polymerizable compound B having a polarity element of an HSP value of 4.8 $MPa^{1/2}$ or more, the adhesiveness between the image and the base material for lamination is improved.
From the above viewpoint, the content of the constitutional unit B is preferably 25% by mass or more, more preferably 40% by mass or more, still more preferably 55% by mass or more, and particularly preferably 70% by mass or more.
The SP value (Hildebrand solubility parameter: $\delta$) is a physical property value defined by a square root of a cohesive energy density, and is a numerical value indicating a dissolving behavior of a substance. The SP value is a parameter which takes polarity of a substance into consideration by dividing the SP value into three components of a dispersion element ($\delta D$), a polarity element ($\delta P$), and a hydrogen bonding element ($\delta H$), which is a Hansen solubility parameter (HSP value).
$\delta^2$ is represented by $\delta D^2 + \delta P^2 + \delta H^2$.
In the present disclosure, the dispersion element, the polarity element, and the hydrogen bonding element of the HSP value are calculated based on the structure of the compound using Hansen solubility parameter software (product name "HSPiP 5th Edition").
From the viewpoint of further increasing the affinity with the base material for lamination and improving the adhesiveness to the base material for lamination, in the polymerizable compound B, the polarity element of the HSP value is preferably 5.0 $MPa^{1/2}$ or more, more preferably 5.3 $MPa^{1/2}$ or more, and still more preferably 5.6 $MPa^{1/2}$ or more.
The upper limit value of the polarity element of the HSP value is not particularly limited, but is, for example, 21.5 $MPa^{1/2}$.
In addition, from the viewpoint of further enhancing the affinity with the base material for lamination and improving the adhesiveness to the base material for lamination, in the polymerizable compound B, the hydrogen bond element of the HSP value is preferably 11.0 $MPa^{1/2}$ or less, more preferably 10.0 $MPa^{1/2}$ or less, still more preferably 8.6 $MPa^{1/2}$ or less, particularly preferably 8.0 $MPa^{1/2}$ or less, and most preferably 7.5 $MPa^{1/2}$ or less.
The lower limit value of the hydrogen bond element of the HSP value is not particularly limited, but is, for example, 3.0 $MPa^{1/2}$.
As described above, the resin T may contain two or more kinds of the constitutional units B, and in a case where the resin T contains two or more kinds of the constitutional units B, the resin T is synthesized using two or more kinds of polymerizable compounds.
In a case where two or more kinds of polymerizable compound are used, it is preferable that at least one polymerizable compound B among the two or more kinds of polymerizable compounds satisfies the above-described preferred ranges of the polarity element and the hydrogen bond element of the HSP value.
Specifically, the "in the polymerizable compound B, the hydrogen bond element of the HSP value is 11.0 $MPa^{1/2}$ or less" means that a hydrogen bond element of the HSP value in at least one polymerizable compound B in the two or more kinds of polymerizable compounds is 11.0 $MPa^{1/2}$ or less.
From the viewpoint of further improving the blocking resistance, the resin T preferably contains two or more kinds of the constitutional units B.
Specifically, it is preferable that the polymerizable compound B contains a polymerizable compound B1 having a hydrogen bond element of the HSP value of 11.0 $MPa^{1/2}$ or less and a polymerizable compound B2 having a hydrogen bond element of the HSP value of more than 11.0 $MPa^{1/2}$.
In a case where the resin T contains the constitutional unit B1 derived from the polymerizable compound B1 and the constitutional unit B2 derived from the polymerizable compound B2, long-term blocking resistance is improved while maintaining the adhesiveness to the base material for lamination.
From the viewpoint of further improving the adhesiveness to the base material for lamination and the blocking resistance, a mass ratio of a content of the polymerizable compound B1 to a content of the polymerizable compound B2 is preferably 1 to 20 and more preferably 2 to 17.
It is preferable that the constitutional unit B is at least one constitutional unit selected from the group consisting of Formulae (1) to (5).

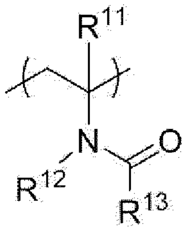
(1)

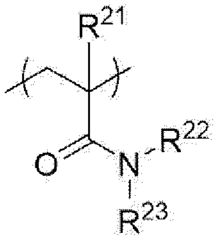
(2)

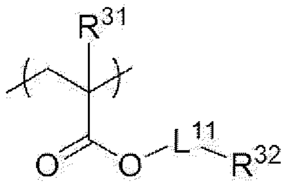
(3)

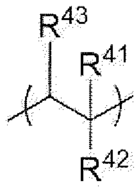
(4)

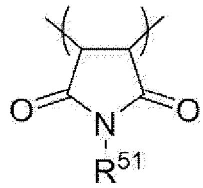
(5)

In Formula (1), $R^{11}$ represents a hydrogen atom or a hydrocarbon group, $R^{12}$ and $R^{13}$ each independently represent a hydrocarbon group which may include an oxygen atom, or a hydrogen atom, and $R^{12}$ and $R^{13}$ may be bonded to each other to form a ring,

in Formula (2), $R^{21}$ represents a hydrogen atom or a hydrocarbon group, $R^{22}$ and $R^{23}$ each independently represent a hydrocarbon group which may include an oxygen atom, or a hydrogen atom, and $R^{22}$ and $R^{23}$ may be bonded to each other to form a ring,

in Formula (3), $R^{31}$ represents a hydrogen atom or a hydrocarbon group, $L^{11}$ represents a single bond or a divalent linking group, and $R^{32}$ represents a hydrocarbon group including at least one selected from the group consisting of -O-, -S-, -C(=O)-, -NH-, and -N<,

in Formula (4), $R^{41}$ represents a hydrogen atom or a hydrocarbon group, $R^{42}$ and $R^{43}$ each independently represent a hydrogen atom, a cyano group, a hydrocarbon group having a carbonyl group, a phosphoric acid ester group, or a monovalent heterocyclic group, and $R^{42}$ and $R^{43}$ may be bonded to each other to form a ring,

in Formula (5), $R^{51}$ represents a hydrogen atom or a hydrocarbon group.

Formula (1)

In Formula (1), $R^{11}$ is preferably a hydrogen atom or a methyl group.

In Formula (1), the hydrocarbon group represented by $R^{12}$ and $R^{13}$ may be a linear hydrocarbon group, a branched hydrocarbon group, or a cyclic hydrocarbon group, but is preferably a linear hydrocarbon group.

The hydrocarbon group represented by $R^{12}$ and $R^{13}$ may be a saturated hydrocarbon group or an unsaturated hydrocarbon group, but is preferably a saturated hydrocarbon group.

That is, the hydrocarbon group represented by $R^{12}$ and $R^{13}$ is more preferably a linear alkyl group.

The number of carbon atoms in the hydrocarbon group represented by $R^{12}$ and $R^{13}$ is preferably 1 to 10.

Examples of the hydrocarbon group which may include an oxygen atom include -O-monovalent hydrocarbon group, -divalent hydrocarbon group-OH, -divalent hydrocarbon group-O-monovalent hydrocarbon group, and -divalent hydrocarbon group-C=(O)O-monovalent hydrocarbon group.

From the viewpoint of reducing hydrogen bonding properties of the resin T, increasing the affinity with the polymer including vinyl chloride as a constitutional unit, and reducing a viscosity of the ink, $R^{12}$ and $R^{13}$ are each independently preferably the hydrocarbon group which may include an oxygen atom.

In addition, it is preferable that $R^{12}$ and $R^{13}$ are bonded to each other to form a ring. The ring formed by the bonding of $R^{12}$ and $R^{13}$ to each other is preferably a 5-membered ring to an 8-membered ring.

Examples of the constitutional unit represented by Formula (1) include the following constitutional units.

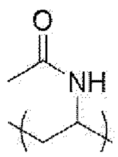
(1-1)

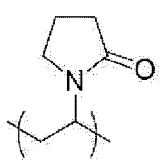
(1-2)

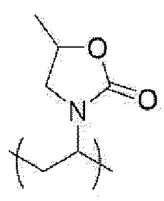
(1-3)

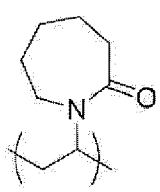
(1-4)

Formula (2)

In Formula (2), $R^{21}$ is preferably a hydrogen atom or a methyl group.

In Formula (2), the hydrocarbon group represented by $R^{22}$ and $R^{23}$ may be a linear hydrocarbon group, a branched hydrocarbon group, or a cyclic hydrocarbon group, but is preferably a linear hydrocarbon group.

The hydrocarbon group represented by $R^{22}$ and $R^{23}$ may be a saturated hydrocarbon group or an unsaturated hydrocarbon group, but is preferably a saturated hydrocarbon group.

That is, the hydrocarbon group represented by $R^{22}$ and $R^{23}$ is more preferably a linear alkyl group.

The number of carbon atoms in the hydrocarbon group represented by $R^{22}$ and $R^{23}$ is preferably 1 to 10 and more preferably 2 to 8.

Examples of the hydrocarbon group which may include an oxygen atom include -divalent hydrocarbon group-OH, -divalent hydrocarbon group-O-monovalent hydrocarbon group, -divalent hydrocarbon group-C=(O)-monovalent hydrocarbon group, and -divalent hydrocarbon group-C=(O)O-monovalent hydrocarbon group.

In Formula (2), from the viewpoint of reducing hydrogen bonding properties of the resin T, increasing the affinity with the polymer including vinyl chloride as a constitutional unit, and reducing the viscosity of the ink, $R^{22}$ and $R^{23}$ are each independently preferably the hydrocarbon group which may include an oxygen atom.

In addition, it is preferable that $R^{22}$ and $R^{23}$ are bonded to each other to form a ring. The ring formed by the bonding of $R^{22}$ and $R^{23}$ to each other is preferably a 5-membered ring to an 8-membered ring.

Examples of the constitutional unit represented by Formula (2) include the following constitutional units.

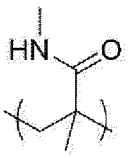
(2-1)

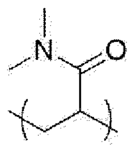
(2-2)

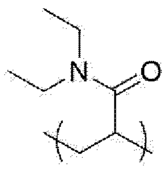
(2-3)

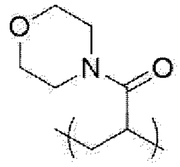
(2-4)

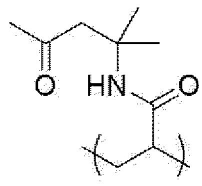
(2-5)

Formula (3)

In Formula (3), $R^{31}$ is preferably a hydrogen atom or a methyl group.

In Formula (3), the divalent linking group represented by $L^{11}$ is preferably an alkylene group having 1 to 3 carbon atoms or a group represented by any one of Formulae (L11) to (L14); more preferably an alkylene group having 1 to 3 carbon atoms or a group represented by any one of Formulae (L11) to (L13); and still more preferably an alkylene group having 1 to 3 carbon atoms or a group represented by Formula (L11).

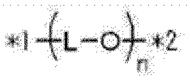
(L11)

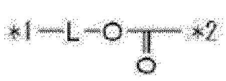
(L12)

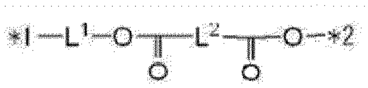
(L13)

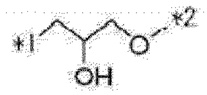
(L14)

In Formula (L11), L represents an alkylene group having 1 to 3 carbon atoms, n represents an integer of 1 to 4, *1 represents a bonding position with the oxygen atom, and *2 represents a bonding position with $R^{32}$.

In Formula (L12), L represents an alkylene group having 1 to 3 carbon atoms, *1 represents a bonding position with the oxygen atom, and *2 represents a bonding position with $R^{32}$.

In Formula (L13), $L^1$ and $L^2$ each independently represent an alkylene group having 1 to 3 carbon atoms, *1 represents a bonding position with the oxygen atom, and *2 represents a bonding position with $R^{32}$.

In Formula (L14), *1 represents a bonding position with the oxygen atom, and *2 represents a bonding position with $R^{32}$.

In Formula (L11), n is preferably an integer of 1 to 3, more preferably 1 or 2, and particularly preferably 1.

In Formula (3), the hydrocarbon group represented by $R^{32}$ may be a linear hydrocarbon group, a branched hydrocarbon group, or a cyclic hydrocarbon group, but is preferably a hydrocarbon group including a ring structure.

The hydrocarbon group represented by $R^{32}$ may be a saturated hydrocarbon group or an unsaturated hydrocarbon group, but is preferably a saturated hydrocarbon group.

The number of carbon atoms in the hydrocarbon group represented by $R^{32}$ is preferably 3 to 20, more preferably 3 to 15, still more preferably 3 to 12, and particularly preferably 3 to 10.

In the hydrocarbon group including at least one selected from the group consisting of -O-, -S-, -C(=O)-, -NH-, and -N<, examples of a combination of two or more of -O-, -S-, -C(=O)-, -NH-, and -N< include -C(=O)O-, -O-C(=O)O-, -C(=O)-NH-, and a pyrrolidone ring.

$R^{32}$ is preferably a hydrocarbon group including -C(=O)-NH-, a hydrocarbon group including -C(=O)O-, a hydrocarbon group including -O-C-O-, or a hydrocarbon group including a hydroxyl group.

Examples of the constitutional unit represented by Formula (3) include the following constitutional units.

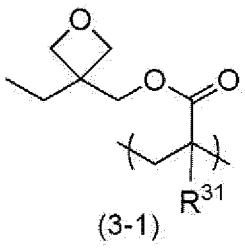
(3-1)

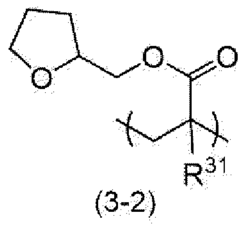
(3-2)

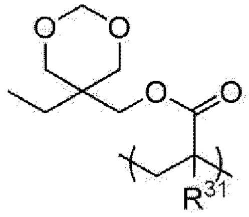
(3-3)

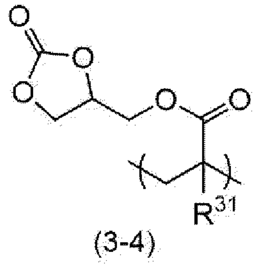
(3-4)

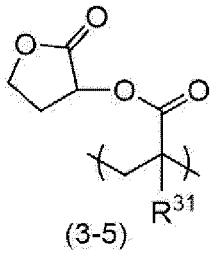
(3-5)

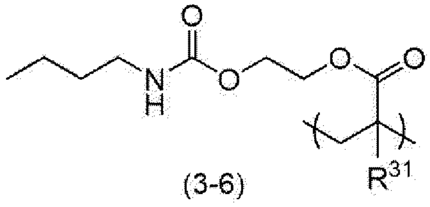
(3-6)

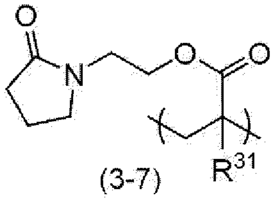
(3-7)

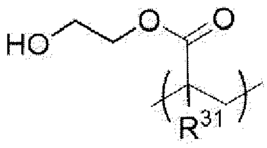
(3-8)

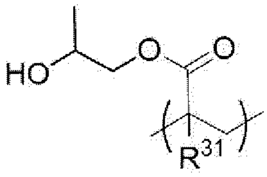
(3-9)

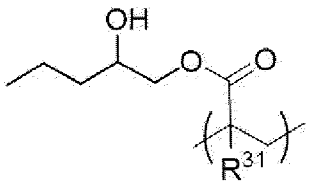
(3-10)

Formula (4)

In Formula (4), $R^{41}$ is preferably a hydrogen atom or a methyl group.

In Formula (4), the monovalent heterocyclic group represented by $R^{42}$ and $R^{43}$ refers to a group obtained by removing one hydrogen atom from a heterocyclic compound.

A heterocycle in the monovalent heterocyclic group is preferably a 5-membered ring or a 6-membered ring. In addition, the above-described heterocycle may form a fused ring with an aliphatic ring, an aromatic ring, or another heterocycle.

Examples of a heteroatom in the above-described heterocycle include an N atom, an O atom, and an S atom, and an N atom is preferable.

Examples of the above-described heterocycle include a pyridine ring, a piperidine ring, a furan ring, a furfuran ring, a thiophene ring, a pyrrole ring, a quinoline ring, a morpholine ring, an indole ring, an imidazole ring, a pyrazole ring, a carbazole ring, a phenothiazine ring, a phenoxazine ring, an indoline ring, a pyrrolidone ring, a thiazole ring, a pyrazine ring, a thiadiazine ring, a benzoquinoline ring, and a thiadiazole ring.

In Formula (4), from the viewpoint of increasing the affinity with the polymer including vinyl chloride as a constitutional unit, $R^{42}$ and $R^{43}$ are each independently preferably a cyano group or a monovalent heterocyclic group.

Examples of the constitutional unit represented by Formula (4) include the following constitutional units.

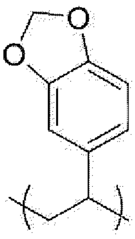 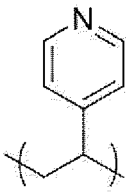 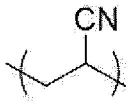

(4-1) (4-2) (4-3)

Formula (5)

In Formula (5), the hydrocarbon group represented by $R^{51}$ may be a linear hydrocarbon group, a branched hydrocarbon group, or a cyclic hydrocarbon group.

The hydrocarbon group represented by $R^{51}$ may be a saturated hydrocarbon group or an unsaturated hydrocarbon group, but is preferably a saturated hydrocarbon group.

The number of carbon atoms in the hydrocarbon group represented by $R^{51}$ is preferably 1 to 10.

Examples of the constitutional unit represented by Formula (5) include the following constitutional units.

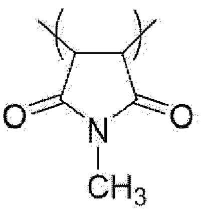 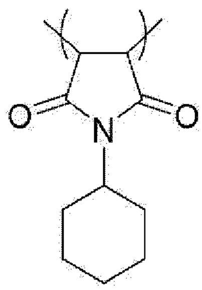

(5-1) (5-2)

The constitutional unit B is a constitutional unit derived from the polymerizable compound B, and can be introduced into the resin T by using the polymerizable compound B as a raw material.

A polarity element (δP) and a hydrogen bonding element (δH) of the HSP value for each polymerizable compound are shown below. The unit is $MPa^{1/2}$.

In the polymerizable compounds shown below, a polymerizable compound in which the polarity element of the HSP value is less than 4.8 $MPa^{1/2}$ does not correspond to the polymerizable compound B.

In the polymerizable compounds shown below, a polymerizable compound in which the polarity element of the HSP value is 4.8 $MPa^{1/2}$ or more corresponds to the polymerizable compound B. In a case of a polymerizable compound derived from the constitutional unit represented by Formulae (1) to (5), the corresponding formula is shown.

| Structural formula | δP | δH |
|---|---|---|
| 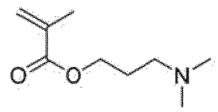 | 3.8 | 4.9 |
| 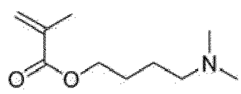 | 3.3 | 4.4 |
| 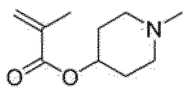 | 3.8 | 5.6 |

(continued)

| Structural formula | δP | δH |
|---|---|---|
| 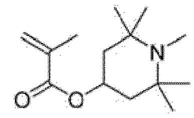 | 1.8 | 2.9 |
| 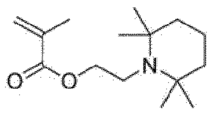 | 2.1 | 3 |
| 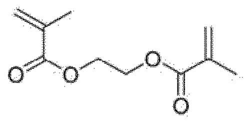 | 4.2 | 5.6 |
| 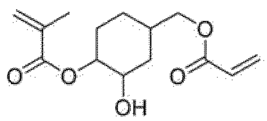 | 4.7 | 7.7 |
| 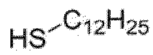 | 2.8 | 3 |
| 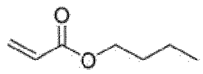 | 4.2 | 5.5 |
| 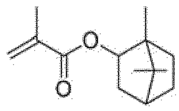 | 2.3 | 2.4 |

| Structural formula | δP | δH | Corresponding formula |
|---|---|---|---|
| 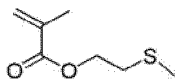 | 5.1 | 5.9 | Formula (3) |
| 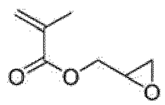 | 6.6 | 6.9 | Formula (3) |
| 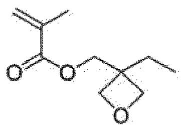 | 4.8 | 4.9 | Formula (3) |
| 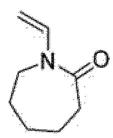 | 5.6 | 5.3 | Formula (1) |
| 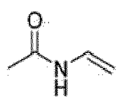 | 13.7 | 10.3 | Formula (1) |
| 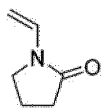 | 8.4 | 6.3 | Formula (1) |

(continued)

| Structural formula | δP | δH | Corresponding formula |
|---|---|---|---|
| 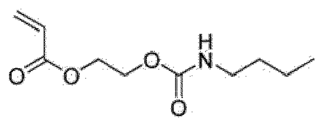 | 7.7 | 7.7 | Formula (3) |
| 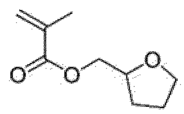 | 5.1 | 5.5 | Formula (3) |
| 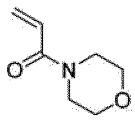 | 11.2 | 5.8 | Formula (2) |
| 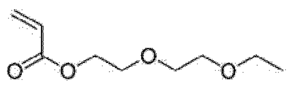 | 5.1 | 6.5 | Formula (3) |
| 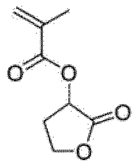 | 8.3 | 6.8 | Formula (3) |
| 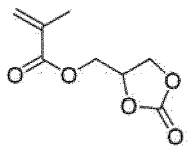 | 14.4 | 6.7 | Formula (3) |

| Structural formula | δP | δH | Corresponding formula |
|---|---|---|---|
| 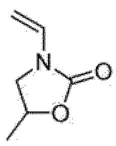 | 8.7 | 6.6 | Formula (1) |
| 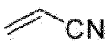 | 13.9 | 7.3 | Formula (4) |
| 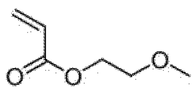 | 5.6 | 7.2 | Formula (3) |
| 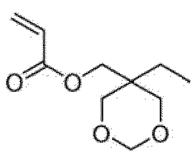 | 5.9 | 5.7 | Formula (3) |
| 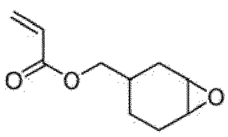 | 5.5 | 5.6 | Formula (3) |

(continued)

| Structural formula | δP | δH | Corresponding formula |
|---|---|---|---|
| 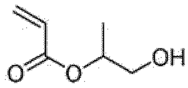 | 6.9 | 11.9 | Formula (3) |
| 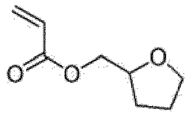 | 5.6 | 5.9 | Formula (3) |
| 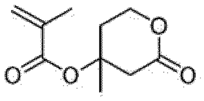 | 6.7 | 5.6 | Formula (3) |
| 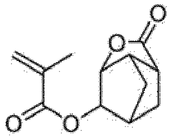 | 5.8 | 4.4 | Formula (3) |
| 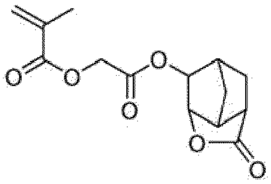 | 4.8 | 5.5 | Formula (3) |

| Structural formula | δP | δH | Corresponding formula |
|---|---|---|---|
| 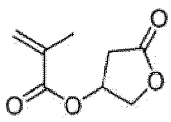 | 8.5 | 6.7 | Formula (3) |
| 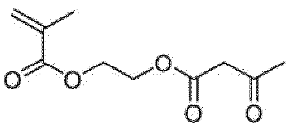 | 7 | 6.8 | Formula (3) |
| 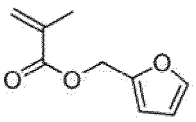 | 5.1 | 6.2 | Formula (3) |
| 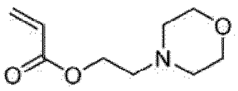 | 5.6 | 7.3 | Formula (3) |
| 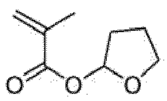 | 5.4 | 5.8 | Formula (3) |
| 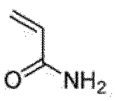 | 14.7 | 13.7 | Formula (2) |

(continued)

| Structural formula | δP | δH | Corresponding formula |
|---|---|---|---|
| 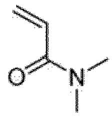 | 10.4 | 7.6 | Formula (2) |
| 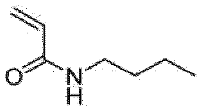 | 10.2 | 8 | Formula (2) |
| 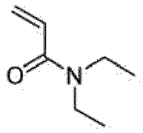 | 8.8 | 3.5 | Formula (2) |
| 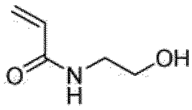 | 15.2 | 15.7 | Formula (2) |

| Structural formula | δP | δH | Corresponding formula |
|---|---|---|---|
| 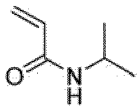 | 10.2 | 6.5 | Formula (2) |
| 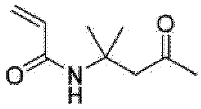 | 9 | 5.4 | Formula (2) |
| 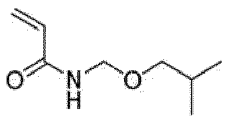 | 8.7 | 5.5 | Formula (2) |
| 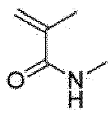 | 10.6 | 6.8 | Formula (2) |
| 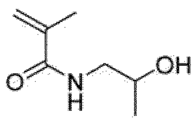 | 10.4 | 10.5 | Formula (2) |
| 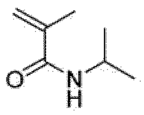 | 10.9 | 7.2 | Formula (2) |
| 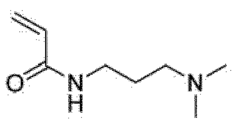 | 9.7 | 7.2 | Formula (2) |

(continued)

| Structural formula | δP | δH | Corresponding formula |
|---|---|---|---|
| 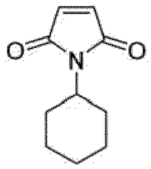 | 6.4 | 4.4 | Formula (5) |
| 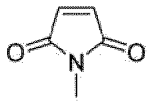 | 11.9 | 7 | Formula (5) |
| 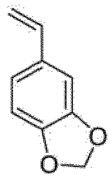 | 5.4 | 6.4 | Formula (4) |

| Structural formula | δP | δH | Corresponding formula |
|---|---|---|---|
| 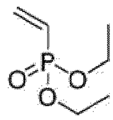 | 12.6 | 7.3 | Formula (4) |
| 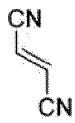 | 21.1 | 9.1 | Formula (4) |
| 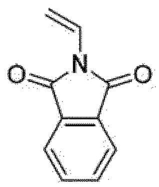 | 7.5 | 4.6 | Formula (4) |
| 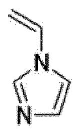 | 8 | 5.9 | Formula (4) |
| 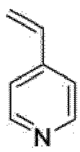 | 5.8 | 5.2 | Formula (4) |
| 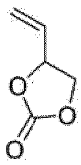 | 16.9 | 6.3 | Formula (4) |
| 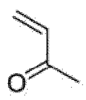 | 7.9 | 5.8 | Formula (4) |

(continued)

| Structural formula | δP | δH | Corresponding formula |
|---|---|---|---|
| 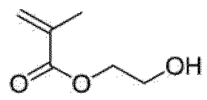 | 7.3 | 11.5 | Formula (3) |
| 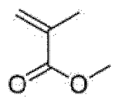 | 5.3 | 6.6 | - |

The resin T preferably contains two or more kinds of the constitutional units B.

In a case where the resin T contains two or more kinds of the constitutional units B, the constitutional unit B preferably includes the constitutional unit represented by Formula (1) and the constitutional unit represented by Formula (2), or includes the constitutional unit represented by Formula (1) and the constitutional unit represented by Formula (3).

From the viewpoint of unevenly dispersing the resin T on the surface of the ink film and improving blocking resistance, a mass ratio of the constitutional unit A to the constitutional unit B is preferably 0.01 or more, more preferably 0.03 or more, and still more preferably 0.05 or more.

From the viewpoint of further improving the affinity with the base material for lamination and improving the blocking resistance, the mass ratio of the constitutional unit A to the constitutional unit B is preferably 0.65 or less, more preferably 0.55 or less, still more preferably 0.45 or less, and particularly preferably 0.35 or less.

From the above viewpoint, the mass ratio of the constitutional unit A to the constitutional unit B is preferably 0.01 to 0.65, more preferably 0.03 to 0.55, still more preferably 0.05 to 0.45, and particularly preferably 0.05 to 0.35.

It is particularly preferable that the resin T contains a structural unit derived from hydroxyethyl methacrylate. Here, the hydroxyethyl methacrylate corresponds to the constitutional unit represented by Formula (3) among the constitutional units B described above.

A mass ratio of the constitutional unit A to the constitutional unit B is as described above.

A content of the structural unit derived from hydroxyethyl (meth)acrylate with respect to the total amount of the resin T is preferably 2% by mass to 40% by mass, more preferably 3% by mass to 30% by mass, and still more preferably 5% by mass to 20% by mass.

The resin T may contain other constitutional units in addition to the constitutional unit A and the constitutional unit B.

From the viewpoint of improving the adhesiveness to the base material for lamination, the total content of the constitutional unit A and the constitutional unit B is preferably 30% by mass or more, more preferably 45% by mass or more, and still more preferably 60% by mass or more with respect to the total amount of the resin T. The total content of the constitutional unit A and the constitutional unit B may be 100% by mass. That is, the resin T may consist of only the constitutional unit A and the constitutional unit B.

In a case where the resin T contains other constitutional units, the other constitutional units are not particularly limited, and examples thereof include a constitutional unit derived from a monofunctional polymerizable monomer described later.

Physical properties

A glass transition temperature of the resin T is preferably 150°C or lower, more preferably 130°C or lower, and still more preferably 100°C or lower. The lower limit value of the glass transition temperature is not particularly limited, but from the viewpoint of blocking resistance, it is preferably -20°C.

In the present disclosure, the glass transition temperature is measured using a differential scanning calorimeter, for example, using a product name "DSC-60" manufactured by Shimadzu Corporation.

In a case where the glass transition temperature of the resin T is 150°C or lower, when the base material for lamination is thermocompression-bonded to the image, mobility of the resin T is improved, and the adhesiveness to the base material for lamination is improved.

A solubility parameter (SP value) of the resin T is preferably 7.5 $MPa^{1/2}$ to 14.0 $MPa^{1/2}$, more preferably 8.5 $MPa^{1/2}$ to 13.0 $MPa^{1/2}$, and still more preferably 9.5 $MPa^{1/2}$ to 12.0 $MPa^{1/2}$.

In the present disclosure, the SP value means a Hansen solubility parameter.

The SP value of the resin T is calculated by the following method.

100 mg of a sample is completely dissolved in 2 mL of THF, and deionized water or n-hexane is added dropwise to the solution, and an SP value of the sample is calculated from a volume fraction immediately before a timing of turbidity

using the following expression.

SP value of THF = $\delta_T$
SP value of water = $\delta_W$
SP value of n-hexane = $\delta_H$
Volume fraction (water): deionized water/(deionized water + THF) = $V_W$
Volume fraction (hexane): hexane/(hexane + THF) = $V_H$
SP value of mixed solution of deionized water/THF = $\delta_{WT} = \delta_T \times (1 - V_W) + \delta_W \times V_W$ SP value of mixed solution of n-hexane/THF = $\delta_{HT} = \delta_T \times (1 - V_H) + \delta_H \times V_H$
SP value of sample = $\delta_P = (\delta_{WT} \times (V_W)^{0.5} + \delta_{HT} \times (VH)^{0.5})/((VW)^{0.5} + (VH)^{0.5})$

In a case where the SP value of the resin T is within the above-described range, the adhesiveness to the base material for lamination is improved.

From the viewpoint of improving the adhesiveness to the base material for lamination, a weight-average molecular weight of the resin T is preferably 1,000 or more, more preferably 3,000 or more, and still more preferably 5,000 or more. On the other hand, from the viewpoint of j ettability and storage stability of the ink, the weight-average molecular weight of the resin T is preferably 80,000 or less, more preferably 60,000 or less, and still more preferably 40,000 or less.

In the present disclosure, the weight-average molecular weight is measured by the same method as the measuring method of the number-average molecular weight described above.

From the viewpoint of improving the adhesiveness to the base material for lamination, a content of the resin T is preferably 0.1% by mass or more, more preferably 0.3% by mass or more, and still more preferably 0.5% by mass or more with respect to the total amount of the ink. On the other hand, from the viewpoint of j ettability and storage stability of the ink, the content of the resin T is preferably 10.0% by mass or less, more preferably 8.0% by mass or less, still more preferably 6.0% by mass or less, and even more preferably 3.0% by mass or less with respect to the total amount of the ink.

A weight-average molecular weight (Mw) of the resin is preferably 1,000 to 70,000 and more preferably 5,000 to 50,000.

In a case where the ink according to the present disclosure contains the resin, a content of the resin is preferably 0.1% by mass to 10.0% by mass, more preferably 0.3% by mass to 8.0% by mass, still more preferably 0.5% by mass to 6.0% by mass, and even more preferably 0.5% by mass to 3.0% by mass with respect to the total amount of the ink.

Surfactant

The ink according to the present disclosure may contain at least one surfactant.

In the present disclosure, the surfactant means a compound having a surfactant function and a molecular weight of less than 1,000.

The molecular weight can be calculated from the type and the number of atoms constituting the compound.

However, from the viewpoint of improving the affinity between the base material for image recording and the ink, it is preferable that the ink does not contain a surfactant, or a content of the surfactant with respect to the total amount of the ink is less than 0.1% by mass. In a case where the ink contains a surfactant, as the surfactant, a generally known surfactant can be used.

Polymerization Inhibitor

The ink according to the present disclosure preferably contains at least one polymerization inhibitor.

Examples of the polymerization inhibitor include p-methoxyphenol, quinones (for example, hydroquinone, benzoquinone, and methoxybenzoquinone), phenothiazine, catechols, alkylphenols (for example, dibutyl hydroxy toluene (BHT)), alkyl bisphenols, zinc dimethyldithiocarbamate, copper dimethyldithiocarbamate, copper dibutyldithiocarbamate, copper salicylate, thiodipropionic acid esters, mercaptobenzimidazole, phosphites, 2,2,6,6-tetramethylpiperidine-1-oxyl (TEMPO), 2,2,6,6-tetramethyl-4-hydroxypiperidine-1-oxyl (TEMPOL), and tris(N-nitroso-N-phenylhydroxylamine)aluminum salt (also known as Cupferron Al).

Among these, as the polymerization inhibitor, it is preferable to include at least one selected from the group consisting of p-methoxyphenol, catechols, quinones, alkylphenols, TEMPO, TEMPOL, and tris(N-nitroso-N-phenylhydroxylamine)aluminum salt; and it is more preferable to include at least one selected from the group consisting of p-methoxyphenol, hydroquinone, benzoquinone, BHT, TEMPO, TEMPOL, and tris(N-nitroso-N-phenylhydroxylamine) aluminum salt.

In a case where the ink contains a polymerization inhibitor, a content of the polymerization inhibitor is preferably 0.01% by mass to 2.0% by mass, more preferably 0.02% by mass to 1.0% by mass, and still more preferably 0.03% by

mass to 0.5% by mass with respect to the total amount of the ink.

Water

The ink according to the present disclosure may contain a small amount of water.
Specifically, a content of water with respect to the total amount of the ink is preferably 3% by mass or less, more preferably 2% by mass or less, and still more preferably 1% by mass or less.
The ink is preferably a non-aqueous ink which substantially does not contain water.

Other Components

The ink according to the present disclosure may contain a component other than those described above.
Examples of the other components include an ultraviolet absorber, a co-sensitizer, an antioxidant, a fading inhibitor, and a conductive salt.
With regard to the other components, reference can be appropriately made to known documents, for example, JP2011-225848A, JP2009-209352A, and the like.

Physical Properties of Ink

From the viewpoint of jettability, a viscosity of the ink according to the present disclosure is preferably 5 mPa·s to 50 mPa·s, more preferably 10 mPa·s to 30 mPa·s, and still more preferably 10 mPa·s to 25 mPa·s.
The viscosity means a value measured at 25°C.
The viscosity is a value measured using a viscometer, and can be measured using, for example, VISCOMETER RE-85L (manufactured by TOKI SANGYO CO., LTD.).
From the viewpoint of jettability, a surface tension of the ink according to the present disclosure is preferably 60 mN/m or less, more preferably 20 mN/m to 50 mN/m, and still more preferably 25 mN/m to 45 mN/m.
The surface tension means a value measured at 25°C.
The surface tension is a value measured using a surface tensiometer, and can be measured using, for example, product name "Automatic Surface Tentiometer CBVP-Z (manufactured by Kyowa Interface Science Co., Ltd.)".

Image Recording Method

The image recording method according to the present disclosure includes a step of applying the above-described ink according to the present disclosure onto a base material for image recording, containing a polymer including vinyl chloride as a constitutional unit, by an ink jet recording method to record an image (hereinafter, also referred to as an image recording step).
Since the ink according to the present disclosure is used, the image recording method according to the present disclosure exhibits the same effects as the effects of the ink according to the present disclosure described above (that is, the effect of improving the lamination strength of the image and the effect of improving the storage stability of the ink).

Image Recording Step

The image recording step is a step of applying the above-described ink according to the present disclosure onto a base material for image recording, containing a polymer including vinyl chloride as a constitutional unit, by an ink jet recording method to record an image.

Base Material for Image Recording

The base material for image recording in the image recording step contains a polymer including vinyl chloride as a constitutional unit.
The polymer including vinyl chloride as a constitutional unit may be a homopolymer of vinyl chloride (that is, polyvinyl chloride), or may be a copolymer including vinyl chloride and a monomer other than the vinyl chloride as a constitutional unit.
Examples of the copolymer including vinyl chloride and a monomer other than the vinyl chloride as a constitutional unit include a vinyl chloride-urethane copolymer, a vinyl chloride-ethylene copolymer, a vinyl chloride-vinyl acetate copolymer, a vinyl chloride-vinyl acetate-maleic acid copolymer, a vinyl chloride-vinyl acetate-vinyl alcohol copolymer, and a vinyl chloride-ethylene-vinyl acetate copolymer.
Among these, the base material for image recording preferably contains polyvinyl chloride.

The base material for image recording may contain a component other than the polymer including vinyl chloride as a constitutional unit. Examples of other components include a plasticizer, a stabilizer, an antioxidant, an ultraviolet absorbing agent, a binder resin, and a white pigment.

The base material for image recording may include a layer containing the polymer including vinyl chloride as a constitutional unit and a surface-treated layer, but from the viewpoint of obtaining the adhesiveness between the base material for image recording and the image by dissolving the ink in the base material for image recording, it is preferable that the base material for image recording does not include the surface-treated layer. That is, the surface of the base material for image recording to be applied with the ink preferably contains the polymer including vinyl chloride as a constitutional unit.

A thickness of the base material for image recording is not particularly limited, but is, for example, preferably 0.1 μm to 1,000 μm, more preferably 0.1 μm to 800 μm, and still more preferably 1 μm to 500 μm.

Application of Ink

In the image recording step, the ink is applied by an ink jet recording method.

The ejection method of the ink by the ink jet recording method is not particularly limited, and for example, any known methods such as an electric charge control method of jetting the ink using electrostatic attraction force, a drop-on-demand method (pressure pulse method) using vibration pressure of a piezoelectric element, an acoustic ink jet method of converting an electric signal into an acoustic beam, irradiating the ink with the acoustic beam, and jetting the ink by using radiation pressure, a thermal ink jet method (BUBBLE JET (registered trademark)) of heating the ink, forming bubbles, and using generated pressure, and the like may be used.

As the ink jet recording method, particularly, it is possible to effectively use the method described in JP1979-59936A (JP-S54-59936A), which is an ink jet recording method of causing an ink to experience a rapid volume change by the action of thermal energy and jetting the ink from a nozzle by using the acting force resulting from the change of state. As the ink jet recording method, a method described in paragraphs 0093 to 0105 of JP2003-306623A can also be applied.

The application of the ink onto the base material for image recording by the ink jet recording method can be performed by allowing the ink to be jetted from a nozzle of an ink jet head.

The way of using the ink jet head also includes a shuttle method of performing recording while a short serial head is allowed to scan in the width direction of the recorded medium, and a line method of using a line head in which recording elements are arranged correspondingly to the entire range of one side of the recorded medium.

In the line method, image recording can be performed on the entire surface of the recorded medium by scanning the recorded medium in a direction intersecting the direction in which the recording elements are aligned. In the line method, a transport system such as a carriage that allows the short head to perform scanning in the shuttle method is unnecessary. In addition, in the line method, as compared with the shuttle method, a carriage is not required to move, and a complicated scanning control with the recorded medium is unnecessary, and only the recorded medium moves. Therefore, according to the line method, an increase in the recording speed of an image is achieved as compared with the shuttle method.

The ink is preferably applied using an ink jet head having a resolution of 300 dpi or more (more preferably 600 dpi or more and still more preferably 800 dpi or more). Here, dpi is an abbreviation for dot per inch, and 1 inch is 2.54 cm.

From the viewpoint of obtaining a high-definition image, the amount of liquid droplets of the ink jetted from nozzles of the ink jet head is preferably 1 picoliter (pL) to 10 pL and more preferably 1.5 pL to 6 pL.

Drying Step

The image recording step preferably includes a step of drying the applied ink after the ink is applied onto the base material for image recording (hereinafter, also referred to as "drying step").

The ink may be dried by natural drying, but is preferably dried by heating.

A heating temperature in the heating drying is preferably 30°C to 90°C and more preferably 50°C to 80°C.

Examples of the method of the heating drying include a method using infrared (IR) drying, hot air drying, and heating and drying using a heating device (for example, a heater, a hot plate, a heating furnace, or the like).

The heating drying can be performed by heating the ink from at least one of an image-recorded surface side or an image non-recorded surface side of the base material for image recording.

Active energy ray irradiating step

The image recording step preferably includes a step of applying the ink onto the base material for image recording and then irradiating the applied ink with active energy ray (hereinafter, also referred to as "active energy ray irradiating

step").

By irradiating the ink applied onto the base material for image recording with active energy ray, a polymerization reaction of the polymerizable compound contained in the ink proceeds. As a result, the image can be fixed, and a hardness or the like of the image can be improved.

Examples of the active energy ray include ultraviolet rays, visible rays, and electron beams. Among these, ultraviolet rays are preferable as the active energy ray.

A peak wavelength of the ultraviolet rays is preferably 200 nm to 405 nm, more preferably 220 nm to 390 nm, and still more preferably 220 nm to 380 nm.

The exposure amount of ultraviolet rays is preferably 20 $mJ/cm^2$ to 5 $J/cm^2$ and more preferably 100 $mJ/cm^2$ to 1,500 $mJ/cm^2$. As irradiation conditions and basic irradiation method, irradiation conditions and irradiation method described in JP1985-132767A (JP-S60-132767A) can be adopted. Specifically, the irradiation method is preferably a method of providing a light source on both sides of a head unit including an ink jet device and scanning the substrate by the head unit and the light source by a so-called shuttle method, or a method of irradiating the substrate with another light source that is not involved in driving.

As a light source for the ultraviolet irradiation, a discharge lamp or a laser light source (such as a gas laser and a solid-state laser) is mainly used, and as the discharge lamp, for example, a mercury lamp, a metal halide lamp, and an ultraviolet fluorescent lamp are widely known. In addition, a semiconductor light source such as ultraviolet light emitting diode (UV-LED) and ultraviolet laser diode (UV-LD) is expected as the light source for the ultraviolet irradiation because it is compact, has long service life and high efficiency, and is inexpensive. Among these, a metal halide lamp, a high-pressure mercury lamp, a medium-pressure mercury lamp, a low-pressure mercury lamp, or UV-LED is preferable as the light source for the ultraviolet irradiation.

## Manufacturing Method of Laminate

The manufacturing method of a laminate according to the present disclosure includes a step of obtaining an image recorded material including the base material for image recording and the image by the above-described image recording method according to the present disclosure, and a step (hereinafter, also referred to as a laminating step) of laminating the image recorded material and a base material for lamination, containing a polymer including vinyl chloride as a constitutional unit, in an arrangement in which the image in the image recorded material and the base material for lamination face each other, to obtain a laminate.

Since the image recording method according to the present disclosure is included, the manufacturing method of a laminate according to the present disclosure exhibits the same effects as the effects of the ink according to the present disclosure described above (that is, the effect of improving the lamination strength of the image and the effect of improving the storage stability of the ink).

### Step of Obtaining Image Recorded Material

The step of obtaining an image recorded material can refer to the image recording method according to the present disclosure described above.

### Laminating Step

The laminating step is a step of laminating the above-described image recorded material (that is, an image recorded material including the base material for image recording and the image) and a base material for lamination, containing a polymer including vinyl chloride as a constitutional unit, in an arrangement in which the image in the image recorded material and the base material for lamination face each other, to obtain a laminate.

### Base Material for Lamination

A preferred aspect of the base material for lamination is the same as the preferred aspect of the base material for image recording described above, and thus the description thereof will be omitted.

### Laminating Method

In the laminating step, the lamination is carried out with an arrangement in which the image and the base material for lamination face each other.

In this case, the image and the base material for lamination may be laminated in contact with each other, or may be laminated through another layer.

However, from the viewpoint of more effectively exhibiting the effect of improving the lamination strength, it is preferable that the image and the base material for lamination are laminated in the laminating step such that the image and the base material for lamination are in contact with each other. As a result, a laminate having a laminated structure of base material for lamination/image/base material for image recording is obtained.
In the laminating step, it is preferable that the image and the base material for lamination are subjected to thermocompression bonding at a temperature of 100°C or higher. Since the weighted average value of Tg of the homopolymers of the polymerizable monomers contained in the ink is 0°C to 50°C, the image and the base material for lamination are effectively thermally fused by thermocompression bonding at a temperature of 50°C or higher, and the adhesiveness between the image and the base material for lamination is further improved.
The temperature of the thermocompression bonding is more preferably 100°C or higher.
From the viewpoint of suppressing thermal decomposition, the upper limit value of the temperature in a case of performing the thermocompression bonding is preferably 200°C, more preferably 160°C, and still more preferably 140°C.
The temperature during the thermocompression bonding means a surface temperature of the base material for lamination.
A pressure during the thermocompression bonding is preferably 0.1 MPa to 20 MPa and more preferably 0.5 MPa to 15 MPa.
A time for the thermocompression bonding is, for example, 10 seconds to 500 seconds.
The thermocompression bonding may be performed in two stages. For example, a pressure at the first stage may be set to 0.5 MPa to 5 MPa, and a pressure at the second stage may be set to 6 MPa to 15 MPa, which is higher than the pressure at the first stage.
The laminate obtained by the manufacturing method of a laminate according to the present disclosure can be used, for example, as a floor material or a wall material of a transportation device (railway, bus, or the like), or a floor material or a wall material of a building.

Examples

Hereinafter, the present disclosure will be described in more detail using Examples. However, the present disclosure is not limited to the following examples as long as it does not exceed the gist of the present invention.
Hereinafter, "%" in a case of meaning a concentration and a content means "% by mass", unless otherwise specified.
Hereinafter, the coloring pigment, the polymer-type pigment dispersing agent, the photopolymerization initiator, and the polymerization inhibitor may be abbreviated as "pigment", "dispersing agent", "initiator", and "inhibitor", respectively.
Preparation of Dispersing Agent
Each dispersing agent shown in Table 1 (that is, a dispersing agent having a Tg of 80°C or higher, a dispersing agent having a Tg of higher than 0°C and lower than 80°C, and a dispersing agent having a Tg of 0°C or lower) was prepared.

[Table 1]

| Type | Dispersing agent solution or dispersing agent | Mw of dispersing agent | Tg of dispersing agent | Amine value of dispersing agent (mgKOH/g) | Concentration of solid contents | Solvent |
|---|---|---|---|---|---|---|
| Dispersing agent having Tg of 80°C or higher | 30% Solution of synthetic dispersing agent 1 | 20000 | 115°C | 36.6 | 30% | Phenoxyethyl acrylate (PEA) |
| | 30% Solution of synthetic dispersing agent 2 | 40000 | 120°C | 36.3 | 30% | Phenoxyethyl acrylate (PEA) |
| | 30% Solution of synthetic dispersing agent 3 | 10000 | 110°C | 36.4 | 30% | Phenoxyethyl acrylate (PEA) |
| | DisperBYK186 (30% solution of dispersing agent) | 39000 | 86°C | 33.2 | 30% | Dibasic ester mixture ($CH_3O_2C(CH_2)_nCO_2CH_3$ (n=2,3,4)) |
| Dispersing agent having Tg of higher than 0°C and lower than 80°C | Solsperse 76500 (50% solution of dispersing agent) | N.D. | 70°C | N.D. | 50% | n-butyl acetate |
| Dispersing agent having Tg of 0°C or lower | EFKA PX 4701 (100% dispersing agent) | 22000 | -67°C | 39.9 | 100% | - |
| | Solsperse 32000 (100% dispersing agent) | 45000 | -65°C | 10.4 | 100% | - |
| | Ajisper PB821 (100% dispersing agent) | 50000 | -50°C | 7.2 | 100% | - |
| | EFKA PX 4300 (80% solution of dispersing agent) | N.D. | -98°C | 56.6 | 80% | 1-Methoxy-2-propyl acetate |
| | EFKA PX 4350 (50% solution of dispersing agent) | N.D. | -108°C | 12.4 | 50% | 1-Methoxy-2-propyl acetate |

Here, DisperBYK168 is a product manufactured by BYK; Solsperse 76500 and Solsperse 32000 are both products manufactured by Japan Lubrizol Corporation; EFKA PX 4701, EFKA PX 4300, and EFKA PX 4350 are products manufactured by EFKA; and Ajisper PB821 is a product manufactured by Ajinomoto Fine-Techno Co., Inc.

N.D. means no measurement result (No Data).

The 30% solution of the synthetic dispersing agent 1, the 30% solution of the synthetic dispersing agent 2, and the 30% solution of the synthetic dispersing agent 3 are solutions produced as follows.

Production of 30% solution of synthetic dispersing agent 1

A monomer mixed solution of the following amine monomer 1 (8.0 g), the following oligomer 1 (16.0 g), and methyl ethyl ketone (30.0 g) was introduced into a three-neck flask purged with nitrogen, and the mixture was heated to 65°C while stirring with a stirrer and flowing nitrogen into the flask. Subsequently, the following two steps were performed.
First step: 60 mg of V-65 was added to the above-described mixed solution, and the mixture was heated and stirred at 65°C for 1 hour.
Second step: 60 mg of V-65 was added thereto, and the mixture was further heated and stirred at 65°C for 1 hour.
The obtained reaction solution was poured into 1,000 mL of hexane while stirring, the resulting precipitate was heated and dried, and the precipitate was re-dissolved in phenoxyethyl acrylate (PEA) to obtain the 30% solution of the synthetic dispersing agent 1 as a synthetic dispersing agent solution having a concentration of solid contents of 30%.
Here, the compounds used as raw materials are as follows.
Amine monomer 1

... 3-dimethylaminopropylacrylamide (manufactured by KJ Chemicals Co., Ltd.) Oligomer 1
... poly(methyl methacrylate) macromonomer having a methacryloyl group at a terminal; trade name: AA-6 (manufactured by TOAGOSEI CO., LTD.)
V-65
... 2,2'-azobis(2,4-dimethylvaleronitrile) (manufactured by FUJIFILM Wako Pure Chemical Corporation)

Production of 30% solution of synthetic dispersing agent 2 and 30% solution of synthetic dispersing agent 3
The 30% solution of the synthetic dispersing agent 2 and the 30% solution of the synthetic dispersing agent 3 were obtained in the same manner as in the production of the 30% solution of the synthetic dispersing agent 1, except that the amount of V-65 to be added and the heating time were each changed as appropriate.
The weight-average molecular weight (Mw), the glass transition temperature (Tg), and the amine value (mgKOH/g) of the synthetic dispersing agent 1, the synthetic dispersing agent 2, and the synthetic dispersing agent 3 were as shown in Table 1.

Measurement of Glass Transition Temperature (Tg) of Dispersing Agent

The glass transition temperature (Tg) of each dispersing agent was measured by the above-described method using a differential scanning calorimeter (manufactured by PerkinElmer Inc.; DSC-7) in accordance with ASTM D 3418-8.

Measurement of Weight-Average Molecular Weight (Mw) of Dispersing Agent

The weight-average molecular weight (Mw) of each dispersing agent was measured by the above-described method.

Measurement of Amine Value of Dispersing Agent

The amine value of the dispersing agent was measured by the above-described method using an automatic titrator COM-1500 manufactured by HIRANUMA Co., Ltd.

Preparation of Resin T-1 as Additive for Ink

A resin T-1 as an additive for an ink was prepared as follows.
Synthesis of Resin T-1 (copolymer of NVC/HEMA/one terminal methacrylic-modified silicone = 85/5/10 (mass ratio))
1-propanol (203.7 g) and N-vinylcaprolactam (NVC) (127.5 g) were weighed and charged into a 1 L three-neck flask equipped with a cooling pipe, and the mixture was heated and stirred at 75°C under a nitrogen stream. Separately, a mixed solution prepared by mixing 1-propanol (135.8 g), hydroxyethyl methacrylate (HEMA) (7.5 g), X-22-174ASX (one terminal methacrylic-modified silicone) (manufactured by Shin-Etsu Chemical Co., Ltd.) (15.0 g), and V-601 (dimethyl 2,2'-azobis(isobutyronitrile); polymerization initiator manufactured by FUJIFILM Wako Pure Chemical Corporation) (10.5 g) was added dropwise to the above-described flask over 3 hours. After completion of the dropwise addition, the mixture was further stirred at 75°C for 1 hour, the temperature was raised to 90°C, and the mixture was further reacted for 3 hours. The mixture was allowed to cool to room temperature (25°C; the same applies hereinafter), phenoxyethyl acrylate (PEA) (350.0 g) and 4-hydroxy-2,2,6,6-tetramethylpiperidine-1-oxyl (TEMPO) (3.5 g) were added thereto, and 1-propanol was distilled off under reduced pressure conditions of 80°C/50 hPa to obtain a 30 mass% solution of phenoxyethyl acrylate of a

resin T-1 (a copolymer of NVCL/HEMA/one terminal methacrylic-modified silicone = 85/5/10 (mass ratio)). A weight-average molecular weight of the resin T was 5,000.

Examples 1 to 9, 101 to 107, 201 to 213, and 301 to 310, and Comparative Examples 1 to 3 and 101

Preparation of Pigment Dispersion Liquid

The pigment, the dispersing agent, the dispersion medium, and the inhibitor (that is, the polymerization inhibitor) shown in Tables 2 to 5 were mixed so that the content of each component was the content (% by mass) described in Tables 2 to 5. The obtained mixture was stirred for 20 minutes at 25°C under the conditions of 5,000 rpm using a mixer (product name "L4R", manufactured by Silverson) to obtain a preliminary dispersion liquid. The preliminary dispersion liquid was put into a disperser motor mill M50 (manufactured by EIGER Co., LTD.), and subjected to a dispersion treatment for 4 hours at a circumferential speed of 9 m/s using zirconia beads having a diameter of 0.65 mm, thereby obtaining a pigment dispersion liquid.

In Tables 2 to 5, the numbers indicating the amounts of the respective components in the formulation of the pigment dispersion liquid indicate the contents (% by mass) of the respective components with respect to the total amount of the pigment dispersion liquid.

Preparation of ink

Each ink having an ink formulation of each ink type (A to K) in Tables 2 to 5 was prepared using each pigment dispersion liquid.

Table 5 shows specific ink formulations in each ink type (A to K).

In the preparation of the ink in each of Examples and Comparative Examples, the respective components in the ink formulation of each ink type were mixed so as to have the contents shown in Table 5, thereby obtaining a mixture. The obtained mixture was stirred for 20 minutes at 25°C under the conditions of 5,000 rpm using a mixer (product name "L4R", manufactured by Silverson) to obtain an ink.

Table 2 shows Examples 1 to 9 and Comparative Examples 1 and 2. Examples and Comparative Examples are examples of a series in which the formulation of the pigment dispersion liquid (specifically, the content of the dispersing agent) was changed, and the ink formulations were all the formulation of the ink type A.

Table 3 shows Examples 1 and 101 to 107 and Comparative Example 101. Examples and Comparative Examples are examples of a series in which the formulation of the pigment dispersion liquid (specifically, the type of the dispersing agent) was changed, and the ink formulations were all the formulation of the ink type A.

Table 4 shows Examples 1 and 201 to 213. Examples and Comparative Examples are examples of a series in which the formulation of the pigment dispersion liquid (specifically, the type of the pigment) was changed, and the ink formulations were all the formulation of the ink type A.

Table 5 shows Examples 1 and 301 to 310. Examples and Comparative Examples are examples of a series in which the ink type (specifically, the type and content of the monomer) was changed, and the formulation of the pigment dispersion liquid was common.

Example 1 is shown in all of Tables 2 to 5.

In Tables 2 to 5, details of each material are as follows.

Dispersion Medium

· PEA ... phenoxyethyl acrylate

Inhibitor (that is, polymerization inhibitor)

UV-12: FLORSTAB UV12, nitroso-based polymerization inhibitor, tris(N-nitroso-N-phenylhydroxylamine) aluminum salt, manufactured by Kromachem Ltd.

Pigment

· Irgazin Red L 3670 HD (PR254) (DPP) ... manufactured by DIC Corporation, Pigment Red 254, diketopyrrolopyrrole pigment

· Irgazin Flame Red K 3800 (PR272) (DPP) ... manufactured by DIC Corporation, Pigment Red 272, diketopyrrolopyrrole pigment

. Irgazin Rubine L 4025 (PR264) (DPP) ... manufactured by DIC Corporation, Pigment Red 264, diketopyrrolopyrrole pigment

· FASTGEN SUPER RED BRZ (PV19) ... manufactured by DIC Corporation, Pigment Violet 19

· INK JET MAGENTA E5B 02 (PV19) ... manufactured by Heubach GmbH, Pigment Violet 19

· INK JET YELLOW H2G (PY120) ... manufactured by Heubach GmbH, Pigment Yellow 120

· Cromophtal Yellow D 1085 (PY150) ... manufactured by DIC Corporation, Pigment Yellow 150
· PV FAST YELLOW H4G (PY151) ... manufactured by Heubach GmbH, Pigment Yellow 151
· INK JET YELLOW 4GC (PY155) ... manufactured by Heubach GmbH, Pigment Yellow 155
· PR122 ... H Cinquasia Magenta D 4550 J manufactured by DIC Corporation, Pigment Red 122, quinacridone pigment
. PR48:4 ... IRGALITE RED D3773 manufactured by DIC Corporation, Pigment Red 48:4
· PY180 ... PV Fast Yellow HG 01 manufactured by Heubach GmbH, Pigment Yellow 180
· PB15:4 ... HELIOGEN BLUE D 7110 F manufactured by DIC Corporation, Pigment Blue 15:4
· CB ... Special Black 250 manufactured by Orion Co., Ltd., Pigment Black 7

Monomer 1

· NVC ... N-vinylcaprolactam
· ACMO ... 4-acryloyl morpholine
· VMOX ... vinylmethyloxazolidinone
· NVP ... N-vinylpyrrolidone
Monomer 2
· CHA ... cyclohexyl acrylate
· THFA ... tetrahydrofurfuryl acrylate
· TMCHA ... 3,3,5-trimethylcyclohexyl acrylate
· TBCHA ... 4-t-butylcyclohexyl acrylate
Other Monomers
· EOEOEA ... etoxyethyethygolicol acrylate
· PEA ... phenoxyethyl acrylate
· IBOA ... isobornyl acrylate
Inhibitor (that is, polymerization inhibitor)
· TEMPOL ... 4-hydroxy-2,2,6,6-tetramethylpiperidine-1-oxyl Sensitizing Dye
· DETX ... 2,4-diethylthioxanthen-9-one
Initiator (that is, photopolymerization initiator)
Omnipol 910: polyethylene glycol di(β-4-[4-(2-dimethylamino-2-benzyl)butanoylphenyl]piperazine)propionate; α-aminoketone-type photopolymerization initiator manufactured by IGM Resins B.V.
· Omnirad 819: bis(2,4,6-trimethylbenzoyl)phenylphosphine oxide; acylphosphine oxide-type photopolymerization initiator manufactured by IGM Resins B.V.

Resin

· Resin T-1 ... resin T-1 produced by the above-described method

Evaluation of Storage Stability of Ink

Storage stability of the ink of each of Examples and Comparative Examples shown in Tables 2 to 5 was evaluated as follows.
The results thereof are shown in Tables 2 to 5.
The ink was filled into a glass screw cap bottle (10 cc) in a volume of 9.5 cc or more, and the bottle was tightly closed. The screw cap bottle filled with the ink was stored in a constant humidity tank in which the temperature was set to a constant (50°C) for 25 days. A rate of change in viscosity and a rate of change in average particle diameter by the storage were determined, and the storage stability of the ink was evaluated.
The results thereof are shown in Tables 2 to 5.
In the following evaluation standard, the rank at which the storage stability of the ink was most excellent is "5".
The viscosity of the ink was measured with an E-type viscometer (manufactured by TOKI SANGYO CO., LTD., RE80 viscometer).
The average particle diameter was measured using a sample (diluted liquid) obtained by diluting the ink with tripropylene glycol monomethyl ether to a concentration of 0.001% to 0.01% by mass, and using a zeta sizer Nano ZS (manufactured by Malvern Panalytical Ltd.) as a measuring device.
Evaluation Standard for Storage Stability of Ink

5: rate of change in average particle diameter was less than 2%.
4: rate of change in average particle diameter was 2% or more and less than 5%.

3: rate of change in average particle diameter was 5% or more and less than 10%.
2: rate of change in average particle diameter was 10% or more and less than 20%.
1: rate of change in average particle diameter was 20% or more.

Image recording

Image recording (that is, production of an image recorded material) was performed as follows using the inks of each of Examples and Comparative Examples shown in Tables 2 to 5.

As an image recording device, an ink jet recording device including an ink jet head (product name "Samba G3L", manufactured by FUJIFILM Corporation) and an LED light source (UV-LED irradiator having a peak wavelength of 385 nm (product name "G4B", manufactured by Kyocera Corporation)) was used.

As a base material for image recording, a polyvinyl chloride base material (product name "PVC35phr", manufactured by OKAMOTO INDUSTRIES, INC.) was used.

The ink was jetted from an ink jet head, and the ink was applied onto a rectangular region of 5 cm × 5 cm in the base material for image recording in a 100% solid image under conditions of a resolution of 1200 × 1200 dot per inch (dpi) and an ink amount of 3.0 g/$m^2$, thereby obtaining a first ink film. The obtained first ink film was irradiated with ultraviolet rays using the LED light source at an exposure amount of 10 mJ/$cm^2$ to 50 mJ/$cm^2$ to obtain a first cured film.

Next, the above-described ink was applied onto the first layer solid image (rectangle of 5 cm × 5 cm) under the same conditions as those for the first layer to obtain a second ink film. The obtained second ink film was irradiated with ultraviolet rays using the LED light source at an exposure amount of 200 mJ/$cm^2$ to 1,000 mJ/$cm^2$ to obtain a second cured film.

In this manner, a solid image having a structure in which two cured films were laminated on the base material for image recording was recorded.

As a result, an image recorded material including a base material for image recording and a solid image was obtained.

Production of Laminate (Laminating Step)

As a base material for lamination, a polyvinyl chloride base material (product name "SG800", manufactured by K&H Trading Co., Ltd., thickness: 75 μm) was used.

The base material for lamination was disposed on the image in the image recorded material obtained above (that is, on the image recorded on the base material for image recording). In this state, the image recorded material and the base material for lamination were thermocompression-bonded using a desktop automatic transfer press machine (product name "AF-54TEN", Asahi Seisakusho Ltd.). As a result, a laminate having a laminated structure of base material for image recording/image/base material for lamination was obtained.

A temperature in the thermocompression bonding was set to 130°C. The thermocompression bonding was carried out at a pressure of 2 MPa for 300 seconds, and then at a pressure of 10 MPa for 60 seconds.

Evaluation of Lamination Strength

For each of Examples and Comparative Examples shown in Tables 2 to 5, a lamination strength of the image was evaluated as follows.

The results thereof are shown in Tables 2 to 5.

An image recording sample of 3.2 cm × 3.2 cm was cut out from the image recorded material obtained above. In addition, a base material sample for lamination, having a size of 3.2 cm × 3.2 cm, was cut out from the base material for lamination.

A polyethylene terephthalate (PET) sheet having a thickness of 12 μm was disposed on the image-recorded surface of the image recording sample in a region of 1.0 cm × 3.2 cm including one side of the image recording sample. Next, a base material sample for lamination, having a size of 3.2 cm × 3.2 cm, was superimposed on the entire image-recorded surface of the image recording sample, the region (region of 1.0 cm × 3.2 cm) where the PET sheet had been disposed, and the region (region of 2.2 cm × 3.2 cm) where the PET sheet was not disposed.

In this state, the image recording sample and the base material sample for lamination were laminated under the same conditions as in the production of the laminate described above. An evaluation sample was obtained by removing the PET sheet from the obtained laminate.

In the evaluation sample, the region where the PET sheet was not disposed before the lamination was adhered to the image recording sample and the base material sample for lamination. On the other hand, in the evaluation sample, the region where the PET sheet had been disposed before the lamination was not adhered to the image recording sample and the base material sample for lamination.

Next, in the region where the image-recording sample and the base material sample for lamination were not adhered, a peeling strength (that is, a lamination strength) was measured by performing a tensile test of pulling the image recording sample and the base material sample for lamination in opposite directions. The tensile test was carried out using a tensile tester (product name "Autograph AGS-X 5KN", manufactured by Shimadzu Corporation). Two evaluation samples were produced, and a tensile test was performed twice. The average value of the two times of the lamination strength was adopted. The evaluation standard was as follows.
In the following evaluation standard, the rank at which the lamination strength was most excellent is "5".
Evaluation Standard for Lamination Strength

5: lamination strength was 7 N/cm or more.
4: lamination strength was 3 N/cm or more and less than 7 N/cm.
3: lamination strength was 2 N/cm or more and less than 3 N/cm.
2: lamination strength was 1 N/cm or more and less than 2 N/cm.
1: lamination strength was less than 1 N/cm.

Evaluation of Color Forming of Image

For each of Examples and Comparative Examples shown in Tables 2 to 5, color forming of the image was evaluated as follows.
The results thereof are shown in Tables 2 to 5.
A density D of the image in the laminate obtained in the production of the laminate described above was measured with SPM100-II manufactured by Gretag Imaging Holding AG
Based on the obtained results, color forming of the image was evaluated according to the following evaluation standard.
Evaluation Standard for Color Forming of Image (ink containing magenta pigment)

| | |
|---|---|
| 5 | Color density: 1.4 or more |
| 4 | Color density: 1.3 or more and less than 1.4 |
| 3 | Color density: 1.2 or more and less than 1.3 |
| 2 | Color density: 1.1 or more and less than 1.2 |
| 1 | Color density: less than 1.1 |

Evaluation Standard for Color Forming of Image (ink containing yellow pigment)

| | |
|---|---|
| 5 | Color density: 1.1 or more |
| 4 | Color density: 1.0 or more and less than 1.1 |
| 3 | Color density: 0.9 or more and less than 1.0 |
| 2 | Color density: 0.8 or more and less than 0.9 |
| 1 | Color density: less than 0.8 |

Evaluation of Weather Fastness of Image

For each of Examples shown in Table 4, a lamination strength of the image was evaluated as follows.
The results are shown in Table 4.
Using the laminate obtained in the production of the laminate described above, weather fastness of the image was measured as follows.
The laminate obtained above was stored in a dark room, and then using a Xe lamp weather fastness tester (QSUN, manufactured by QLAB), chromaticity ($a^{*2}$ and $b^{*2}$) and brightness ($L^2$) of the image in the laminate were measured.
Next, the laminate after the measurement was subjected to a light resistance test of a total of 20 cycles in which the following steps 1 to 3 were set as one cycle, using the Xe lamp weather fastness tester.
Step 1 (8 hours): 50°C, 50 %RH, carrying out light irradiation (approximately 0.5 mW/$cm^2$), not carrying out water spraying
Step 2 (8 hours): 50°C, 98 %RH, not carrying out light irradiation, carrying out water spraying
Step 3 (8 hours): 20°C, 90 %RH, carrying out light irradiation (approximately 0.5 mW/$cm^2$), not carrying out water

spraying

Using the above-described Xe lamp weather fastness tester, chromaticity ($a^{*1}$ and $b^{*1}$) and brightness ($L^1$) of the image in the laminate after the above-described light resistance test were measured.

Based on the measurement results before and after the weather fastness test, a color change ΔE due to the weather fastness test was obtained according to the following expression.

$$\Delta E = \{(a^{*1} - a^{*2})^2 + (b^{*1} - b^{*2})^2 + (L^1 - L^2)^2\}^{1/2}$$

Based on the obtained ΔE, weather fastness of the image was evaluated according to the following evaluation standard.

In the following evaluation standard, the rank at which the weather fastness of the image was most excellent is "5".

Evaluation Standard for Weather Fastness of Image

5: average of ΔE was less than 1.5.
4: average of ΔE was 1.5 or more and less than 3.0.
3: average of ΔE was 3.0 or more and less than 4.5.
2: average of ΔE was 4.5 or more and less than 6.0.
1: average of ΔE was 6.0 or more.

Evaluation of Jettability of Ink

Jettability of the ink was evaluated as follows for the inks of each of Examples and Comparative Examples of the series shown in Table 3 (specifically, the series in which the type of the dispersing agent was mainly changed).

The results are shown in Table 3.

The jettability of the ink was evaluated with an ink jet ejection evaluation device (drop watcher, manufactured by JetXpert) equipped with an ink jet head (product name "Samba G3L", manufactured by FUJIFILM Corporation).

First, the ink was jetted from a nozzle of the above-described ink jet head, and a test image was recorded on ink jet printing paper (Kassai, manufactured by FUJIFILM Corporation). In the test image, the number of missing nozzles was counted and denoted as N1.

Next, the ink was continuously jetted from the nozzle of the above-described ink jet head for 10 minutes.

After the continuous jetting, the ink was jetted again from the nozzle of the above-described ink jet head, and a test image was recorded on the above-described ink jet printing paper. In the test image, the number of missing nozzles was counted and denoted as N2.

Based on these results, an increase in missing nozzle ΔN = N2 - N1 due to the continuous jetting for 10 minutes was calculated.

The above-described operation was repeated three times, the average value of ΔN of the three times was obtained, and the jettability of the ink was evaluated according to the following evaluation standard.

In the following evaluation standard, the rank at which the jettability of the ink was most excellent is "5".

Jettability of Ink

5: average of ΔN was less than 0.8.

4: average of ΔN was 0.8 or more and less than 1.2.

3: average of ΔN was 1.2 or more and less than 1.6.

2: average of ΔN was 1.6 or more and less than 3.0.

1: average of ΔN was 3.0 or more.

[Table 2]

| | | | Tg of dispersing agent | Example 1 | Example 2 | Example 3 | Comparative Example 1 | Example 4 | Example 5 | Comparative Example 2 | Example 6 | Example 7 | Example 8 | Example 9 | Comparative Example 3 |
|---|---|---|---|---|---|---|---|---|---|---|---|---|---|---|---|
| Formulation of pigment dispersion (%) | Dispersing agent | 30% Solution of synthetic dispersing agent 1 | 115°C | 12.0 | 10.0 | 6.0 | 0 | 14.0 | 14.0 | 15.0 | 16.0 | 18.0 | 8.0 | 7.0 | 3.0 |
| | | EFKA PX 4701 (100% dispersing agent) | -67°C | 3.0 | 5.0 | 9.0 | 15.0 | 2.0 | 1.0 | 0 | 4.0 | 4.5 | 2.0 | 1.8 | 12.0 |
| | Dispersion medium | PEA | | 64.0 | 64.0 | 64.0 | 64.0 | 63.0 | 64.0 | 64.0 | 59.0 | 56.5 | 69.0 | 70.3 | 64.0 |
| | Inhibitor | UV-12 | | 1.0 | 1.0 | 1.0 | 1.0 | 1.0 | 1.0 | 1.0 | 1.0 | 1.0 | 1.0 | 1.0 | 1.0 |
| | Pigment | Irgazin Red L 3670 HD (PR254) (DPP) | | 20.0 | 20.0 | 20.0 | 20.0 | 20.0 | 20.0 | 20.0 | 20.0 | 20.0 | 20.0 | 20.0 | 20.0 |
| Ink type | | | | A | A | A | A | A | A | A | A | A | A | A | A |
| Parameter | M1 (concentration (%) in ink) | | | 0.40 | 0.33 | 0.20 | 0 | 0.46 | 0.46 | 0.50 | 0.53 | 0.59 | 0.26 | 0.23 | 0.10 |
| | M2 (concentration (%) in ink) | | | 0.33 | 0.55 | 0.99 | 1.65 | 0.22 | 0.11 | 0.00 | 0.44 | 0.50 | 0.22 | 0.19 | 1.32 |
| | Mp (concentration (%) in ink) | | | 2.20 | 2.20 | 2.20 | 2.20 | 2.20 | 2.20 | 2.20 | 2.20 | 2.20 | 2.20 | 2.20 | 2.20 |
| | Mp/(M1 + M2) | | | 3.03 | 1.33 | 1.33 | 1.33 | 1.25 | 1.33 | 1.33 | 1.00 | 0.89 | 20.0 | 2.29 | 1.55 |
| | M1/M2 | | | 1.20 | 0.60 | 0.20 | 0 | 2.10 | 4.20 | - | 1.20 | 1.20 | 1.20 | 1.20 | 0.08 |
| Evaluation result | Storage stability of ink | | | 5 | 5 | 5 | 5 | 4 | 3 | 1 | 5 | 5 | 4 | 3 | 4 |
| | Lamination strength | | | 5 | 4 | 3 | 1 | 5 | 5 | 5 | 4 | 3 | 5 | 5 | 2 |
| | Color forming | | | 5 | 5 | 5 | 5 | 5 | 5 | 5 | 5 | 5 | 5 | 5 | 5 |

[Table 3]

| | | | Tg of dispersing agent | Example 1 | Example 101 | Example 102 | Example 103 | Comparative Example 101 | Example 104 | Example 105 | Example 106 | Example 107 |
|---|---|---|---|---|---|---|---|---|---|---|---|---|
| Formulation of pigment dispersion (%) | Dispersing agent | 30% Solution of synthetic dispersing agent 1 | 115°C | 12.0 | | | | | 1.20 | 12.0 | 12.0 | 12.0 |
| | | 30% Solution of synthetic dispersing agent 2 | 120°C | | 12.0 | | | | | | | |
| | | 30% Solution of synthetic dispersing agent 3 | 110°C | | | 12.0 | | | | | | |
| | | DisperBYK186 (30% solution of dispersing agent) | 86°C | | | | 12.0 | | | | | |
| | | Solsperse 76500 (50% solution of dispersing agent) | 70°C | | | | | 7.2 | | | | |
| | | EFKA PX 4701 (100% dispersing agent) | -67°C | 3.0 | 3.0 | 3.0 | 3.0 | 3.0 | | | | |
| | | Solsperse 32000 (100% dispersing agent) | -65°C | | | | | | 3.0 | | | |
| | | Ajisper PB821 (100% dispersing agent) | -50°C | | | | | | | 3.0 | | |
| | | EFKA PX 4300 (80% solution of dispersing agent) | -98°C | | | | | | | | 3.8 | |

(continued)

| | | | Tg of dispersing agent | Example 1 | Example 101 | Example 102 | Example 103 | Comparative Example 101 | Example 104 | Example 105 | Example 106 | Example 107 |
|---|---|---|---|---|---|---|---|---|---|---|---|---|
| | | EFKA PX 4350 (50% solution of dispersing agent) | -108°C | | | | | | | | | 6.0 |
| | Dispersion medium | PEA | | 64.0 | 64.0 | 64.0 | 64.0 | 68.8 | 64.0 | 64.0 | 63.3 | 61.0 |
| | Inhibitor | UV-12 | | 1.0 | 1.0 | 1.0 | 1.0 | 1.0 | 1.0 | 1.0 | 1.0 | 1.0 |
| | Pigment | Irgazin Red L 3670 HD (PR254) (DPP) | | 20.0 | 20.0 | 20.0 | 20.0 | 20.0 | 20.0 | 20.0 | 20.0 | 20.0 |
| Ink type | | | | A | A | A | A | A | A | A | A | A |
| Parameter | M1 (concentration (%) in ink) | | | 0.40 | 0.40 | 0.40 | 0.40 | 0 | 0.40 | 0.40 | 0.40 | 0.40 |
| | M2 (concentration (%) in ink) | | | 0.33 | 0.33 | 0.33 | 0.33 | 0.33 | 0.33 | 0.33 | 0.33 | 0.33 |
| | Mp (concentration (%) in ink) | | | 2.20 | 2.20 | 2.20 | 2.20 | 2.20 | 2.20 | 2.20 | 2.20 | 2.20 |
| | Mp/(M1 + M2) | | | 3.03 | 3.03 | 3.03 | 3.03 | 6.67 | 3.03 | 3.03 | 3.03 | 3.03 |
| | M1/M2 | | | 1.20 | 1.20 | 1.20 | 1.20 | 0 | 1.20 | 1.20 | 1.20 | 1.20 |
| Evaluation result | Storage stability of ink | | | 5 | 5 | 5 | 5 | 5 | 5 | 4 | 5 | 5 |
| | Lamination strength | | | 5 | 5 | 4 | 3 | 2 | 5 | 5 | 4 | 4 |
| | Color forming | | | 5 | 5 | 5 | 5 | 5 | 5 | 5 | 5 | 5 |
| | Jettability | | | 5 | 4 | 5 | 5 | 5 | 5 | 5 | 5 | 5 |

[Table 4]

| | | | Tg of dispersing agent | Example 1 | Example 201 | Example 202 | Example 203 | Example 204 | Example 205 | Example 206 | Example 207 | Example 208 | Example 209 | Example 210 | Example 211 | Example 212 | Example 213 |
|---|---|---|---|---|---|---|---|---|---|---|---|---|---|---|---|---|---|
| Formulation of pigment dispersion (%) Formulation of pigment dispersion (%) | Dispersing agent | 30% Solution of synthetic dispersing agent 1 | 115°C | 12.0 | 1.20 | 12.0 | 12.0 | 12.0 | 12.0 | 12.0 | 12.0 | 12.0 | 12.0 | 12.0 | 12.0 | 12.0 | 12.0 |
| | | EFKA PX 4701 (100% dispersing agent) | -67°C | 3.0 | 3.0 | 3.0 | 3.0 | 3.0 | 3.0 | 3.0 | 3.0 | 3.0 | 3.0 | 3.0 | 3.0 | 3.0 | 3.0 |
| | Dispersion medium | PEA | | 64.0 | 64.0 | 64.0 | 64.0 | 64.0 | 69.0 | 69.0 | 69.0 | 69.0 | 64.0 | 64.0 | 69.0 | 74.0 | 74.0 |
| | Inhibitor | UV-12 | | 1.0 | 1.0 | 1.0 | 1.0 | 1.0 | 1.0 | 1.0 | 1.0 | 1.0 | 1.0 | 1.0 | 1.0 | 1.0 | 1.0 |
| | Pigment | Irgazin Red L 3670 HD (PR254) (DPP) | | 20.0 | | | | | | | | | | | | | |
| | | Irgazin Flame Red K 3800 (PR272) (DPP) | | | 20.0 | | | | | | | | | | | | |
| | | Irgazin Rubine L 4025 (PR264) (DPP) | | | | 20.0 | | | | | | | | | | | |
| | | FASTGEN SUPER RED BRZ (PV19) | | | | | 20.0 | | | | | | | | | | |
| | | INK JET MAGENTA E5B 02 (PV19) | | | | | | 20.0 | | | | | | | | | |
| | | INK JET YELLOW H2G (PY120) | | | | | | | 15.0 | | | | | | | | |
| | | Cromophtal Yellow D 1085 (PY150) | | | | | | | | 15.0 | | | | | | | |
| | | PV FAST YELLOW H4G (PY151) | | | | | | | | | 15.0 | | | | | | |
| | | INK JET YELLOW 4GC (PY155) | | | | | | | | | | 15.0 | | | | | |

(continued)

| | | Tg of dispersing agent | Example 1 | Example 201 | Example 202 | Example 203 | Example 204 | Example 205 | Example 206 | Example 207 | Example 208 | Example 209 | Example 210 | Example 211 | Example 212 | Example 213 |
|---|---|---|---|---|---|---|---|---|---|---|---|---|---|---|---|---|
| | | PR122 | | | | | | | | | | 20.0 | | | | |
| | | PR48:4 | | | | | | | | | | | 20.0 | | | |
| | | PY180 | | | | | | | | | | | | 15.0 | | |
| | | PB15:4 | | | | | | | | | | | | | 10.0 | |
| | | CB | | | | | | | | | | | | | | 10.0 |
| Ink type | | | A | A | A | A | A | A | A | A | A | A | A | A | A | A |
| Parameter | M1 (concentration (%) in ink) | | 0.40 | 0.40 | 0.40 | 0.40 | 0.40 | 0.40 | 0.40 | 0.40 | 0.40 | 0.40 | 0.40 | 0.40 | 0.40 | 0.40 |
| | M2 (concentration (%) in ink) | | 0.33 | 0.33 | 0.33 | 0.33 | 0.33 | 0.33 | 0.33 | 0.33 | 0.33 | 0.33 | 0.33 | 0.33 | 0.33 | 0.33 |
| | Mp (concentration (%) in ink) | | 2.20 | 2.20 | 2.20 | 2.20 | 2.20 | 1.65 | 1.65 | 1.65 | 1.65 | 2.20 | 2.20 | 1.65 | 1.10 | 1.10 |
| | Mp/(M1 + M2) | | 3.03 | 3.03 | 3.03 | 3.03 | 3.03 | 2.27 | 2.27 | 2.27 | 2.27 | 3.03 | 3.03 | 2.27 | 1.52 | 1.52 |
| | M1/M2 | | 1.20 | 1.20 | 1.20 | 1.20 | 1.20 | 1.20 | 1.20 | 1.20 | 1.20 | 1.20 | 1.20 | 1.20 | 1.20 | 1.20 |
| Evaluation result | Storage stability of ink | | 5 | 5 | 5 | 5 | 5 | 5 | 5 | 5 | 5 | 3 | 3 | 5 | 5 | 5 |
| | Lamination strength | | 5 | 5 | 5 | 5 | 5 | 5 | 5 | 5 | 5 | 5 | 5 | 5 | 5 | 5 |
| | Color forming | | 5 | 4 | 4 | 3 | 3 | 3 | 4 | 3 | 5 | 3 | 4 | 3 | 5 | 5 |
| | Jettability | | 5 | 5 | 5 | 5 | 5 | 5 | 5 | 5 | 4 | 4 | 3 | 3 | 5 | 5 |

[Table 5]

| | | | Tg of dispersing agent | Example 1 | Example 301 | Example 302 | Example 303 | Example 304 | Example 305 | Example 306 | Example 307 | Example 308 | Example 309 | Example 310 |
|---|---|---|---|---|---|---|---|---|---|---|---|---|---|---|
| Formulation of pigment dispersion (%) | Dispersing agent | 30% Solution of synthetic dispersing agent 1 | 115°C | 12.0 | 1.20 | 12.0 | 12.0 | 12.0 | 12.0 | 12.0 | 12.0 | 12.0 | 1.20 | 12.0 |
| | | EFKA PX 4701 (100% dispersing agent) | -67°C | 3.0 | 3.0 | 3.0 | 3.0 | 3.0 | 3.0 | 3.0 | 3.0 | 3.0 | 3.0 | 3.0 |
| | Dispersion medium | PEA | | 64.0 | 64.0 | 64.0 | 64.0 | 64.0 | 64.0 | 64.0 | 64.0 | 64.0 | 64.0 | 64.0 |
| | Inhibitor | UV-12 | | 1.0 | 1.0 | 1.0 | 1.0 | 1.0 | 1.0 | 1.0 | 1.0 | 1.0 | 1.0 | 1.0 |
| | Pigment | Irgazin Red L 3670 HD (PR254) (DPP) | | 20.0 | 20.0 | 20.0 | 20.0 | 20.0 | 20.0 | 20.0 | 20.0 | 20.0 | 20.0 | 20.0 |
| Ink type | | | | A | B | C | D | E | F | G | H | I | J | K |

(continued)

| | | | Tg of dispersing agent | Example 1 | Example 301 | Example 302 | Example 303 | Example 304 | Example 305 | Example 306 | Example 307 | Example 308 | Example 309 | Example 310 |
|---|---|---|---|---|---|---|---|---|---|---|---|---|---|---|
| **Formulation** of ink (%) | Pigment dispersion | | | 11.0 | 11.0 | 11.0 | 11.0 | 11.0 | 11.0 | 11.0 | 11.0 | 11.0 | 11.0 | 11.0 |
| | Monomer 1 | NVC | | 24.0 | 18.0 | 18.0 | 15.0 | 15.0 | | | | 24.0 | 24.0 | 24.0 |
| | | ACMO | | | | | | | 24.0 | | | | | |
| | | VMOX | | | | | | | | 24.0 | | | | |
| | | NVP | | | | | | | | | 24.0 | | | |
| | Monomer 2 | CHA | | 48.0 | 36.0 | 36.0 | 30.0 | 30.0 | 48.0 | 48.0 | 48.0 | | | |
| | | THFA | | | | | | | | | | 48.0 | | |
| | | TMCHA | | | | | | | | | | | 48.0 | |
| | | TBCHA | | | | | | | | | | | | 48.0 |
| | Other monomers | EOEOEA | | 6.6 | 6.6 | 6.6 | 6.6 | 6.6 | 6.6 | 6.6 | 6.6 | 6.6 | 6.6 | 6.6 |
| | | PEA | | | 18 | | 27 | | | | | | | |
| | | IBOA | | | | 18 | | 27 | | | | | | |
| | Inhibitor | TEMPOL | | 0.4 | 0.4 | 0.4 | 0.4 | 0.4 | 0.4 | 0.4 | 0.4 | 0.4 | 0.4 | 0.4 |
| | Sensitizing dye | DETX | | 2.0 | 2.0 | 2.0 | 2.0 | 2.0 | 2.0 | 2.0 | 2.0 | 2.0 | 2.0 | 2.0 |
| | Initiator | Omnipol 910 | | 3.0 | 3.0 | 3.0 | 3.0 | 3.0 | 3.0 | 3.0 | 3.0 | 3.0 | 3.0 | 3.0 |
| | | Omnirad 819 | | 4.0 | 4.0 | 4.0 | 4.0 | 4.0 | 4.0 | 4.0 | 4.0 | 4.0 | 4.0 | 4.0 |
| | Resin | Resin T-1 | | 1.0 | 1.0 | 1.0 | 1.0 | 1.0 | 1.0 | 1.0 | 1.0 | 1.0 | 1.0 | 1.0 |

(continued)

| | | Tg of dispersing agent | Example 1 | Example 301 | Example 302 | Example 303 | Example 304 | Example 305 | Example 306 | Example 307 | Example 308 | Example 309 | Example 310 |
|---|---|---|---|---|---|---|---|---|---|---|---|---|---|
| Parameter | M1 (concentration (%) in ink) | | 0.40 | 0.40 | 0.40 | 0.40 | 0.40 | 0.40 | 0.40 | 0.40 | 0.40 | 0.40 | 0.40 |
| | M2 (concentration (%) in ink) | | 0.33 | 0.33 | 0.33 | 0.33 | 0.33 | 0.33 | 0.33 | 0.33 | 0.33 | 0.33 | 0.33 |
| | Mp (concentration (%) in ink) | | 2.20 | 2.20 | 2.20 | 2.20 | 2.20 | 2.20 | 2.20 | 2.20 | 2.20 | 2.20 | 220 |
| | Mp/(M1 + M2) | | 3.03 | 3.03 | 3.03 | 3.03 | 3.03 | 3.03 | 3.03 | 3.03 | 3.03 | 3.03 | 3.03 |
| | M1/M2 | | 1.20 | 1.20 | 1.20 | 1.20 | 1.20 | 1.20 | 1.20 | 1.20 | 1.20 | 1.20 | 1.20 |
| | Content of monomer 1 with respect to total amount of ink (%) | | 24.0 | 18.0 | 18.0 | 15.0 | 15.0 | 24.0 | 24.0 | 24.0 | 24.0 | 24.0 | 24.0 |
| | Content of monomer 2 with respect to total amount of ink (%) | | 48.0 | 36.0 | 36.0 | 30.0 | 30.0 | 48.0 | 48.0 | 48.0 | 48.0 | 48.0 | 48.0 |
| | Total content of monomer 1 and monomer 2 with respect to total amount of ink (%) | | 720 | 54.0 | 54.0 | 45.0 | 45.0 | 72.0 | 72.0 | 72.0 | 72.0 | 72.0 | 72.0 |
| Evaluation result | Storage stability of ink | | 5 | 5 | 5 | 5 | 5 | 5 | 5 | 5 | 5 | 5 | 5 |
| | Lamination strength | | 5 | 4 | 4 | 3 | 3 | 4 | 4 | 4 | 5 | 3 | 3 |
| | Color forming | | 5 | 5 | 5 | 5 | 5 | 5 | 5 | 5 | 5 | 5 | 5 |

As shown in Tables 2 to 5, in each of Examples, an ink was used that contained the coloring pigment, the polymerizable compound, the polymer-type pigment dispersing agent having a glass transition temperature of 80°C or higher, and the polymer-type pigment dispersing agent having a glass transition temperature of 0°C or lower, in which, in a case where a concentration of the polymer-type pigment dispersing agent having a glass transition temperature of 80°C or higher is indicated by M1 and a concentration of the polymer-type pigment dispersing agent having a glass transition temperature of 0°C or lower is indicated by M2, $0.20 \leq M1/M2$ was satisfied.

Each of Examples exhibited excellent lamination strength of the image and excellent storage stability of the ink.

Contrary to Examples, Comparative Examples showed the following results.

Comparative Example 1 shown in Table 2 is an example in which the polymer-type pigment dispersing agent having a glass transition temperature of 80°C or higher was not contained. As shown in Table 2, in Comparative Example 1, the lamination strength of the image was reduced.

Comparative Example 2 shown in Table 2 is an example in which the polymer-type pigment dispersing agent having a glass transition temperature of 0°C or lower was not contained. As shown in Table 2, in Comparative Example 2, the storage stability of the ink was reduced.

Comparative Example 3 shown in Table 2 is an example in which the polymer-type pigment dispersing agent having a glass transition temperature of 80°C or higher and the polymer-type pigment dispersing agent having a glass transition temperature of 0°C or lower were contained, but $0.20 \leq M1/M2$ was not satisfied. As shown in Table 2, in Comparative Example 3, the lamination strength of the image was reduced.

Comparative Example 101 shown in Table 3 is an example in which the polymer-type pigment dispersing agent having a glass transition temperature of 0°C or lower was not contained, similarly to Comparative Example 2 shown in Table 2. As shown in Table 3, in Comparative Example 101, the storage stability of the ink was reduced as in Comparative Example 2 shown in Table 2.

In Table 2, as shown in Examples 6 and 7, in a case where the concentration of the coloring pigment was indicated by Mp, the concentration of the polymer-type pigment dispersing agent having a glass transition temperature of 80°C or higher was indicated by M1, and the concentration of the polymer-type pigment dispersing agent having a glass transition temperature of 0°C or lower was indicated by M2, Example 6 in which $1.00 \leq Mp/(M1 + M2) \leq 4.00$ was satisfied was more excellent in the lamination strength of the image than Example 7 in which $Mp/(M1 + M2)$ was less than 1.00.

In Table 2, as shown in Examples 2 and 3, Example 2 in which $0.50 \leq M1/M2 \leq 2.20$ was satisfied was more excellent in the lamination strength than Example 3 in which M1/M2 was less than 0.50.

In Table 2, as shown in Examples 4 and 5, Example 4 in which $0.50 \leq M1/M2 \leq 2.20$ was satisfied was more excellent in the storage stability of the ink than Example 5 in which M1/M2 was more than 2.20.

In Table 5, as shown in Examples 301 to 305, Examples 301 and 302, that contained the monomer 1 which is at least one selected from the group consisting of an N-vinyl compound and a (meth)acryloyl morpholine, and the monomer 2 which has a (meth)acryloyl group and at least one of an aliphatic ring structure or an aliphatic heterocyclic ring structure, has a molecular weight of 205 or less, and has a solubility parameter of 16.5 $MPa^{1/2}$ to 21.5 $MPa^{1/2}$, and had the total content of the monomer 1 and the monomer 2 of 50% by mass or more with respect to the total amount of the ink, were more excellent in the lamination strength of the image as compared with Examples 303 and 304 in which the total content thereof was less than 50% by mass.

In Table 4, as shown in Examples 1 and 201 to 211, Examples 1 and 201 to 208 in which the coloring pigment was at least one selected from the group consisting of a diketopyrrolopyrrole pigment, C. I. Pigment Violet 19, C. I. Pigment Yellow 120, C. I. Pigment Yellow 150, C. I. Pigment Yellow 151, and C. I. Pigment Yellow 155 were excellent in the weather fastness as compared with Examples 209 to 211 in which the coloring pigment was a pigment other than these pigments.

As a supplement to Example 209, in a case of comparison among magenta to red inks, in Examples 1, 201, and 202 using the diketopyrrolopyrrole pigment, the weather fastness of the image was more excellent than that of Example 209 using a quinacridone pigment.

Examples 401 to 403

Examples 401 to 403 in which the ink formulation and the evaluation conditions for the lamination strength were changed as compared with Example 1 described above were performed.

Hereinafter, the details will be described.

In Table 6, for comparison, the evaluation results of the ink of Example 1 under the same evaluation conditions as those of the inks of Examples 401 to 403 are also shown.

Preparation of Pigment Dispersion Liquid

The pigment, the dispersing agent, the dispersion medium, and the inhibitor (that is, the polymerization inhibitor) shown in Table 6 were mixed so that the content of each component was the content (% by mass) described in Table 6. The

obtained mixture was stirred for 20 minutes at 25°C under the conditions of 5,000 rpm using a mixer (product name "L4R", manufactured by Silverson) to obtain a preliminary dispersion liquid. The preliminary dispersion liquid was put into a disperser motor mill M50 (manufactured by EIGER Co., LTD.), and subjected to a dispersion treatment for 4 hours at a circumferential speed of 9 m/s using zirconia beads having a diameter of 0.65 mm, thereby obtaining a pigment dispersion liquid.

In Table 6, the numbers indicating the amounts of the respective components in the formulation of the pigment dispersion liquid indicate the contents (% by mass) of the respective components with respect to the total amount of the pigment dispersion liquid.

Preparation of ink

An ink having an ink formulation of each ink type (L to M) in Table 6 was prepared using the above-described pigment dispersion liquid.

Specifically, the respective components in the ink formulation of each ink type were mixed so as to have the contents shown in Table 6, thereby obtaining a mixture. The obtained mixture was stirred for 20 minutes at 25°C under the conditions of 5,000 rpm using a mixer (product name "L4R", manufactured by Silverson) to obtain an ink.

Table 6 shows Examples 1 and 401 to 403. Examples are examples of a series in which the ink type (specifically, the type and content of the monomer) was changed, and the formulation of the pigment dispersion liquid was common.

In Table 6, "NPGPODA" as the monomer 3 is neopentyl glycol diacrylate, which is a bifunctional acrylate.

The meanings of the other terms described in Table 6 are the same as the meanings of the terms in Tables 1 to 5.

Evaluation of Storage Stability of Ink

The ink obtained above was evaluated for storage stability in the same manner as the evaluation of the storage stability of the ink in Example 1.

The results are shown in Table 6.

Image Recording

Image recording (that is, production of an image recorded material) was performed in the same manner as in Example 1 using the ink obtained above.

Evaluation of Lamination Strength (change in evaluation conditions)

A laminate was produced in the same manner as in the production of the laminate in Example 1, except that the conditions of the thermocompression bonding were changed from "130°C, 300 seconds at a pressure of 2 MPa, and then 60 seconds at a pressure of 10 MPa" to "130°C, 60 seconds at a pressure of 4 MPa" (in general, weak thermocompression bonding conditions).

The lamination strength of the obtained laminate was evaluated under the same conditions as those for the evaluation of the lamination strength in Example 1.

The results are shown in Table 6.

The (change in evaluation conditions) of the lamination strength in Table 6 is an evaluation that is stricter than the evaluation of the lamination strength in Tables 1 to 5, and is an evaluation in which the lamination strength is expressed to be lower (because the thermocompression bonding condition for obtaining the laminate was weak).

Evaluation of Color Forming of Image

Color forming of the image was evaluated in the same manner as in the evaluation of the color forming of the image in Example 1.

The results are shown in Table 6.

[Table 6]

| | | | Tg of dispersing agent | Example 1 | Example 401 | Example 402 | Example 403 |
|---|---|---|---|---|---|---|---|
| Formulation of pigment dispersion (%) | Dispersing agent | 30% Solution of synthetic dispersing agent 1 | 115°C | 12.0 | 12.0 | 12.0 | 12.0 |
| | | EFKA PX 4701 (100% dispersing agent) | -67°C | 3.0 | 3.0 | 3.0 | 3.0 |
| | Dispersion medium | PEA | | 64.0 | 64.0 | 64.0 | 64.0 |
| | Inhibitor | UV-12 | | 1.0 | 1.0 | 1.0 | 1.0 |
| | Pigment | Irgazin Red L 3670 HD (PR254) (DPP) | | 20.0 | 20.0 | 20.0 | 20.0 |
| Ink type | | | | A | L | M | N |
| Formulation of ink (%) | Pigment dispersion | | | 11.0 | 11.0 | 11.0 | 11.0 |
| | Monomer 1 | NVC | | 24.0 | 18.0 | 18.0 | 15.0 |
| | Monomer 2 | CHA | | 48.0 | 36.0 | 36.0 | 30.0 |
| | Monomer 3 | NPGPODA | | | 0.3 | 0.05 | 2.7 |
| | Other monomers | EOEOEA | | 6.6 | 6.6 | 6.6 | 6.6 |
| | Inhibitor | TEMPOL | | 0.4 | 0.4 | 0.4 | 0.4 |
| | Sensitizing dye | DETX | | 2.0 | 2.0 | 2.0 | 2.0 |
| | Initiator | Omnipol 910 | | 3.0 | 3.0 | 3.0 | 3.0 |
| | | Omnirad 819 | | 4.0 | 4.0 | 4.0 | 4.0 |
| | Resin | Resin T-1 | | 1.0 | 1.0 | 1.0 | 1.0 |
| Parameter | M1 (concentration (%) in ink) | | | 0.40 | 0.40 | 0.40 | 0.40 |
| | M2 (concentration (%) in ink) | | | 0.33 | 0.33 | 0.33 | 0.33 |
| | Mp (concentration (%) in ink) | | | 2.20 | 2.20 | 2.20 | 2.20 |
| | Mp/(M1 + M2) | | | 3.03 | 3.03 | 3.03 | 3.03 |
| | M1/M2 | | | 1.20 | 1.20 | 1.20 | 1.20 |
| | Content of monomer 1 with respect to total amount of ink (%) | | | 24.0 | 18.0 | 18.0 | 15.0 |
| | Content of monomer 2 with respect to total amount of ink (%) | | | 48.0 | 36.0 | 36.0 | 30.0 |
| | Total content of monomer 1 and monomer 2 with respect to total amount of ink (%) | | | 72.0 | 54.0 | 54.0 | 45.0 |
| Evaluation result | Storage stability of ink | | | 5 | 5 | 5 | 5 |
| | Lamination strength | | | 3 | 5 | 4 | 4 |
| | Color forming | | | 5 | 5 | 5 | 5 |

As shown in Table 6, in Examples 401 to 403 in which the ink contained the monomer 3 which is a bifunctional acrylate, the lamination strength was more excellent than that in Example 1 in which the ink did not contain the monomer 3.

Among Examples 401 to 403, the lamination strength was particularly excellent in Example 401 in which the

content of the monomer 3 was 0.1% by mass or more and 2.5% by mass or less with respect to the total amount of the ink.

## Claims

1. **An active** energy ray-curable ink jet ink, comprising:

    a coloring pigment;
    a polymerizable compound;
    a polymer-type pigment dispersing agent having a glass transition temperature of 80°C or higher; and
    a polymer-type pigment dispersing agent having a glass transition temperature of 0°C or lower,
    wherein, in a case where a concentration of the polymer-type pigment dispersing agent having a glass transition temperature of 80°C or higher is indicated by M1 and a concentration of the polymer-type pigment dispersing agent having a glass transition temperature of 0°C or lower is indicated by M2, $0.20 \leq M1/M2$ is satisfied.

2. The active energy ray-curable ink jet ink according to claim 1,
wherein, in a case where a concentration of the coloring pigment is indicated by Mp, the concentration of the polymer-type pigment dispersing agent having a glass transition temperature of 80°C or higher is indicated by M1, and the concentration of the polymer-type pigment dispersing agent having a glass transition temperature of 0°C or lower is indicated by M2, $1.00 \leq Mp/(M1 + M2) \leq 4.00$ is satisfied.

3. The active energy ray-curable ink jet ink according to claim 1 or claim 2,
wherein, in a case where the concentration of the polymer-type pigment dispersing agent having a glass transition temperature of 80°C or higher is indicated by M1 and the concentration of the polymer-type pigment dispersing agent having a glass transition temperature of 0°C or lower is indicated by M2, $0.50 \leq M1/M2 \leq 2.20$ is satisfied.

4. The active energy ray-curable ink jet ink according to any one of claims 1 to 3,
wherein the polymerizable compound comprises:

    a monomer 1 which is at least one selected from the group consisting of an N-vinyl compound and a (meth)acryloyl morpholine; and
    a monomer 2 which has a (meth)acryloyl group and at least one of an aliphatic ring structure or an aliphatic heterocyclic ring structure, has a molecular weight of 205 or less, and has a solubility parameter of 16.5 $MPa^{1/2}$ to 21.5 $MPa^{1/2}$, and
    a total content of the monomer 1 and the monomer 2 is 50% by mass or more with respect to a total amount of the active energy ray-curable ink jet ink.

5. The active energy ray-curable ink jet ink according to claim 4,

    wherein the monomer 1 comprises at least one selected from the group consisting of N-vinylcaprolactam, acryloyl morpholine, vinylmethyloxazolidinone, and N-vinylpyrrolidone, and
    the monomer 2 comprises at least one selected from the group consisting of tetrahydrofurfuryl acrylate, cyclohexyl acrylate, 3,3,5-trimethylcyclohexyl acrylate, and 4-t-butylcyclohexyl acrylate.

6. The active energy ray-curable ink jet ink according to claim 4 or claim 5,

    wherein the polymerizable compound further comprises a monomer 3 which is a polymerizable monomer having two or more ethylenically unsaturated groups, and
    a content of the monomer 3 is more than 0% by mass and 20% by mass or less with respect to the total amount of the active energy ray-curable ink jet ink.

7. The active energy ray-curable ink jet ink according to any one of claims 1 to 6,
wherein the coloring pigment is at least one selected from the group consisting of a diketopyrrolopyrrole pigment, C. I. Pigment Violet 19, C. I. Pigment Yellow 120, C. I. Pigment Yellow 150, C. I. Pigment Yellow 151, and C. I. Pigment Yellow 155.

8. An image recording method, comprising:
a step of applying the ink jet ink according to any one of claims 1 to 7 onto a base material for image recording,

comprising a polymer comprising vinyl chloride as a constitutional unit, by an ink jet recording method to record an image.

**9.** A manufacturing method of a laminate, comprising:

a step of obtaining an image recorded material comprising the base material for image recording and the image by the image recording method according to claim 8; and
a step of laminating the image recorded material and a base material for lamination, comprising a polymer comprising vinyl chloride as a constitutional unit, in an arrangement in which the image in the image recorded material and the base material for lamination face each other, to obtain a laminate.

Europäisches Patentamt
European Patent Office
Office européen des brevets

# EUROPEAN SEARCH REPORT

Application Number
EP 25 16 4688

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 4 316 848 A1 (SAKATA INX CORP [JP]) 7 February 2024 (2024-02-07) * claims; par. 33-38, 56-57, 115; tab. 1 * | 1-9 | INV. C09D11/101 C09D11/322 C09D11/326 |
| X | JP 2013 203846 A (FUJIFILM CORP) 7 October 2013 (2013-10-07) * claims; par. 35-48, 66-67, 125-129; tab. 18 * | 1-9 | |
| X | US 2014/368591 A1 (UMEBAYASHI TSUTOMU [JP]) 18 December 2014 (2014-12-18) * (claims; par.45-61; tab. 13-18) * | 1-9 | |
| A | US 2023/220225 A1 (AOKI YOSHIYUKI [JP] ET AL) 13 July 2023 (2023-07-13) * (claims, par. 69) * | 1-9 | |
| A | US 2018/244933 A1 (TSUCHIYA HITOSHI [JP] ET AL) 30 August 2018 (2018-08-30) * (claims; par. 56) * | 1-9 | TECHNICAL FIELDS SEARCHED (IPC) |
| A,D | JP 2011 122063 A (TOYO INK SC HOLDINGS CO LTD) 23 June 2011 (2011-06-23) * the whole document * | 1-9 | C09D |
| A | US 2016/333201 A1 (UMEBAYASHI TSUTOMU [JP]) 17 November 2016 (2016-11-17) * the whole document * | 1-9 | |

The present search report has been drawn up for all claims

2

| Place of search | Date of completion of the search | Examiner |
|---|---|---|
| Munich | 12 August 2025 | von Zitzewitz, A |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

# ANNEX TO THE EUROPEAN SEARCH REPORT ON EUROPEAN PATENT APPLICATION NO. EP 25 16 4688

This annex lists the patent family members relating to the patent documents cited in the above-mentioned European search report. The members are as contained in the European Patent Office EDP file on
The European Patent Office is in no way liable for these particulars which are merely given for the purpose of information.

12-08-2025

| Patent document cited in search report | Publication date | Patent family member(s) | Publication date |
|---|---|---|---|
| EP 4316848 A1 | 07-02-2024 | AU 2021436961 A1 | 05-10-2023 |
| | | CN 117043288 A | 10-11-2023 |
| | | EP 4316848 A1 | 07-02-2024 |
| | | JP 6914469 B1 | 04-08-2021 |
| | | JP 2022149919 A | 07-10-2022 |
| | | TW 202239884 A | 16-10-2022 |
| | | US 2024141192 A1 | 02-05-2024 |
| | | WO 2022201664 A1 | 29-09-2022 |
| JP 2013203846 A | 07-10-2013 | JP 5697625 B2 | 08-04-2015 |
| | | JP 2013203846 A | 07-10-2013 |
| US 2014368591 A1 | 18-12-2014 | CN 104159984 A | 19-11-2014 |
| | | EP 2824149 A1 | 14-01-2015 |
| | | JP 5770765 B2 | 26-08-2015 |
| | | JP 2013213196 A | 17-10-2013 |
| | | US 2014368591 A1 | 18-12-2014 |
| | | WO 2013133123 A1 | 12-09-2013 |
| US 2023220225 A1 | 13-07-2023 | CN 115551959 A | 30-12-2022 |
| | | EP 4155354 A1 | 29-03-2023 |
| | | JP 7502894 B2 | 19-06-2024 |
| | | JP 2021181542 A | 25-11-2021 |
| | | US 2023220225 A1 | 13-07-2023 |
| | | WO 2021235215 A1 | 25-11-2021 |
| US 2018244933 A1 | 30-08-2018 | CN 108504181 A | 07-09-2018 |
| | | JP 6866687 B2 | 28-04-2021 |
| | | JP 2018141101 A | 13-09-2018 |
| | | US 2018244933 A1 | 30-08-2018 |
| JP 2011122063 A | 23-06-2011 | JP 5621251 B2 | 12-11-2014 |
| | | JP 2011122063 A | 23-06-2011 |
| US 2016333201 A1 | 17-11-2016 | CN 105980490 A | 28-09-2016 |
| | | EP 3106496 A1 | 21-12-2016 |
| | | JP 6031053 B2 | 24-11-2016 |
| | | JP 2015151430 A | 24-08-2015 |
| | | US 2016333201 A1 | 17-11-2016 |
| | | WO 2015122073 A1 | 20-08-2015 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2011122063 A
- JP 2002012607 A
- JP 2002188025 A
- JP 2003026978 A
- JP 2003342503 A
- JP 2009197066 A
- WO 2017195428 A
- JP 2007525573 A
- JP 2011225848 A
- JP 2009209352 A
- JP 54059936 A
- JP S5459936 A
- JP 2003306623 A
- JP 60132767 A
- JP S60132767 A


### Non-patent literature cited in the description


- Industrial Organic Pigments. **W. HERBST** ; **K. HUNGER**. Encyclopedia of Pigments. 2000